(19) Europäisches Patentamt

European Patent Office

Office européen des brevets

(11) **EP 4 290 970 A1**

(12) **EUROPEAN PATENT APPLICATION**
published in accordance with Art. 153(4) EPC

(43) Date of publication:
**13.12.2023 Bulletin 2023/50**

(21) Application number: **21924944.8**

(22) Date of filing: **02.08.2021**

(51) International Patent Classification (IPC):
*H04W 74/08* (2009.01)    *H04W 72/04* (2023.01)
*H04W 92/18* (2009.01)    *H04W 4/40* (2018.01)

(52) Cooperative Patent Classification (CPC):
**H04W 4/40; H04W 72/04; H04W 74/08; H04W 92/18**

(86) International application number:
**PCT/KR2021/010030**

(87) International publication number:
**WO 2022/169046 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.02.2021  KR 20210016513**

(71) Applicant: **LG Electronics Inc.**
**Yeongdeungpo-gu**
**Seoul 07336 (KR)**

(72) Inventors:
• **BAEK, Jongseob**
  **Seoul 06772 (KR)**
• **SEO, Hanbyul**
  **Seoul 06772 (KR)**

(74) Representative: **Plasseraud IP**
**66, rue de la Chaussée d'Antin**
**75440 Paris Cedex 09 (FR)**

(54) **METHOD FOR TRANSMITTING AND RECEIVING SIDELINK SIGNAL ON UNLICENSED BAND BY TERMINAL IN WIRELESS COMMUNICATION SYSTEM SUPPORTING SIDELINK, AND DEVICE THEREFOR**

(57)    According to various embodiments, disclosed are a method for obtaining a first slot comprising a plurality of subchannels on an unlicensed band by a terminal in a wireless communication system supporting a sidelink, and a device therefor. Disclosed are a method and a device, the method comprising the steps of: transmitting, on a licensed band, a first signal reserving a first slot and a first subchannel for the unlicensed band; receiving, from a plurality of terminals, second signals reserving a subchannel which do not overlap one another in the first slot; and transmitting a third signal on the first slot and the first subchannel if the first slot has been obtained, wherein the terminal performs listen before talk (LBT) on the unlicensed band for obtaining the first slot in place of the plurality of terminals on the basis of an index of the first subchannel having a higher priority than indexes of subchannels reserved by the plurality of terminals.

FIG. 11

EP 4 290 970 A1

## Description

### TECHNICAL FIELD

The present disclosure relates to a method of transmitting and receiving a sidelink signal in unlicensed bands by a user equipment (UE) in a wireless communication system supporting sidelink, and more particularly, to a method of reserving resources for unlicensed bands based on Listen-Before-Talk (LBT) and apparatus therefor.

### BACKGROUND

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multi carrier frequency division multiple access (MC-FDMA) system.

A sidelink (SL) refers to a communication method in which a direct link is established between user equipment (UE), and voice or data is directly exchanged between terminals without going through a base station (BS). SL is being considered as one way to solve the burden of the base station due to the rapidly increasing data traffic.

V2X (vehicle-to-everything) refers to a communication technology that exchanges information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive Machine Type Communication (MTC), and Ultra-Reliable and Low Latency Communication (URLLC) may be referred to as new radio access technology (RAT) or new radio (NR). Even in NR, vehicle-to-everything (V2X) communication may be supported.

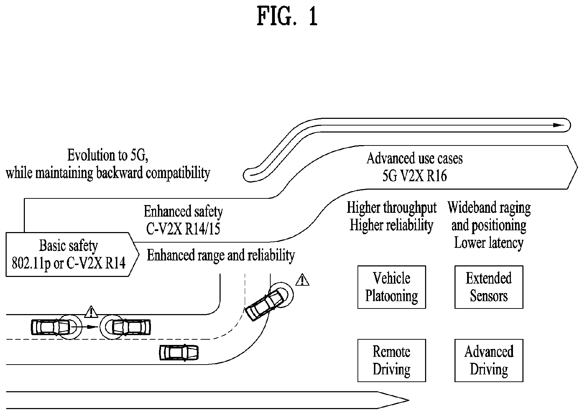

FIG. 1 is a diagram comparing RAT-based V2X communication before NR with NR-based V2X communication.

Regarding V2X communication, in RAT prior to NR, a scheme for providing a safety service based on V2X messages such as a basic safety message (BSM), a cooperative awareness message (CAM), and a decentralized environmental notification message (DENM) was mainly discussed. The V2X message may include location information, dynamic information, and attribute information. For example, the UE may transmit a periodic message type CAM and/or an event triggered message type DENM to another UE.

For example, the CAM may include dynamic state information about a vehicle such as direction and speed, vehicle static data such as dimensions, and basic vehicle information such as external lighting conditions and route details. For example, a UE may broadcast the CAM, and the CAM latency may be less than 100 ms. For example, when an unexpected situation such as a breakdown of the vehicle or an accident occurs, the UE may generate a DENM and transmit the same to another UE. For example, all vehicles within the transmission coverage of the UE may receive the CAM and/or DENM. In this case, the DENM may have a higher priority than the CAM.

Regarding V2X communication, various V2X scenarios have been subsequently introduced in NR. For example, the various V2X scenarios may include vehicle platooning, advanced driving, extended sensors, and remote driving.

For example, based on vehicle platooning, vehicles may dynamically form a group and move together. For example, to perform platoon operations based on vehicle platooning, vehicles belonging to the group may receive periodic data from a leading vehicle. For example, the vehicles belonging to the group may reduce or increase the distance between the vehicles based on the periodic data.

For example, based on advanced driving, a vehicle may be semi-automated or fully automated. For example, each vehicle may adjust trajectories or maneuvers based on data acquired from local sensors of nearby vehicles and/or nearby logical entities. Also, for example, each vehicle may share driving intention with nearby vehicles.

For example, on the basis of extended sensors, raw data or processed data acquired through local sensors, or live video data may be exchanged between a vehicle, a logical entity, UEs of pedestrians and/or a V2X application server. Thus, for example, the vehicle may recognize an environment that is improved over an environment that may be detected using its own sensor.

For example, for a person who cannot drive or a remote vehicle located in a dangerous environment, a remote driver or V2X application may operate or control the remote vehicle based on remote driving. For example, when a route is predictable as in the case of public transportation, cloud computing-based driving may be used to operate or control the remote vehicle. For example, access to a cloud-based back-end service platform may be considered for remote driving.

A method to specify service requirements for various V2X scenarios such as vehicle platooning, advanced driving, extended sensors, and remote driving is being discussed in the NR-based V2X communication field.

**DISCLOSURE**

**TECHNICAL PROBLEM**

The present disclosure is to provide a method of determining a representative user equipment (UE) among UEs performing sidelink communication based on the index of a subchannel and efficiently performing Listen-Before-Talk (LBT) in unlicensed bands by the representative UE without involvement of a base station.

It will be appreciated by those of ordinary skill in the art to which the embodiment(s) pertain that the objects that could be achieved with the embodiment(s) are not limited to what has been particularly described hereinabove and the above and other objects will be more clearly understood from the following detailed description.

**TECHNICAL SOLUTION**

In an aspect of the present disclosure, there is provided a method of receiving, by a first user equipment (UE), a request positioning reference signal (PRS) in a wireless communication system supporting sidelink. The method may include: receiving a first positioning signal including scheduling information on the request PRS; receiving the request PRS requesting transmission of a response PRS based on the scheduling information; transmitting a second positioning signal scheduling the response PRS; and transmitting the response PRS. A PRS pattern of the response PRS may be determined based on an acknowledgment/negative-acknowledgment (ACK/NACK) for the request PRS.

Alternatively, based on the NACK for the request PRS, the response PRS may have a second PRS pattern obtained by inverting a first PRS pattern scheduled by the second positioning signal in a frequency domain.

Alternatively, based on the NACK for the request PRS, the response PRS may have a second PRS pattern obtained by inverting a first PRS pattern scheduled by the second positioning signal in a time domain.

The method may include: transmitting a first signal in licensed bands, wherein the first signal is to reserve the first slot and a first subchannel for the unlicensed bands; receiving, from a plurality of UEs, second signals for reserving non-overlapping subchannels in the first slot; and transmitting a third signal on the first subchannel and in the first slot based on acquisition of the first slot. Based on that an index of the first subchannel has a higher priority than indices of subchannels reserved by the plurality of UEs, the UE may perform Listen -Before-Talk (LBT) in the unlicensed bands to acquire the first slot on behalf of the plurality of UEs.

When it is determined that the unlicensed bands are idle as a result of performing the LBT, the UE may transmit an access signal in at least one predetermined orthogonal frequency division multiplexing (OFDM) symbol in the first slot, and the access signal is to inform the plurality of UEs of the acquisition of the first slot.

Alternatively, the access signal may be a demodulation reference signal (DMRS) related to the UE, and the DMRS is repeated a plurality of times.

Alternatively, the transmission of the access signal may be related to repeated transmission of a positioning reference signal (PRS) with a predetermined PRS pattern.

Alternatively, the at least one predetermined OFDM symbol may include a first OFDM symbol of the first slot.

Alternatively, when it is determined that the unlicensed bands are idle as a result of performing the LBT, the UE may transmits a fourth signal before the first slot in the unlicensed bands, and the fourth signal is to occupy the unlicensed bands.

Alternatively, the first signal may be a physical sidelink control channel (PSCCH), and the third signal may be a physical sidelink shared channel (PSSCH).

In another aspect of the present disclosure, there is provided a method of acquiring, by a second UE, a first slot including a plurality of subchannels in unlicensed bands in a wireless communication system supporting sidelink. The method may include: transmitting a first signal in licensed bands, wherein the first signal is to reserve the first slot and a second subchannel for the unlicensed bands; receiving, from a plurality of UEs, second signals for reserving non-overlapping subchannels in the first slot; and transmitting a third signal on the second subchannel and in the first slot based on acquisition of the first slot. When an access signal is received from any one of the plurality of UEs in at least one predetermined OFDM symbol in the first slot, the first slot may be acquired based on that an index of the second subchannel has a lower priority than an index of at least one of the subchannels.

Alternatively, the access signal may include a DMRS repeated a plurality of times or a PRS with a predetermined PRS pattern.

In another aspect of the present disclosure, there is provided a first UE configured to acquire a first slot including a plurality of subchannels in unlicensed bands in a wireless communication system supporting sidelink communication. The first UE may include: a radio frequency (RF) transceiver; and a processor connected to the RF transceiver. The processor may be configured to control the RF transceiver to: transmit a first signal in licensed bands, wherein the first signal is to reserve the first slot and a first subchannel for the unlicensed bands; receive, from a plurality of UEs, second signals for reserving non-overlapping subchannels in the first slot; and transmit a third signal on the first subchannel and in the first slot based on acquisition of the first slot. Based on that an index of the first subchannel has a higher priority than indices of subchannels reserved by the plurality of UEs, the processor may be configured to perform LBT in the unlicensed bands to acquire the first slot on behalf of the plurality of UEs.

In another aspect of the present disclosure, there is provided a second UE configured to acquire a first slot including a plurality of subchannels in unlicensed bands in a wireless communication system supporting sidelink. The second UE may include: an RF transceiver; and a processor connected to the RF transceiver. The processor may be configured to control the RF transceiver to: transmit a first signal in licensed bands, wherein the first signal is to reserve the first slot and a second subchannel for the unlicensed bands; receive, from a plurality of UEs, second signals for reserving non-overlapping subchannels in the first slot; and transmit a third signal on the second subchannel and in the first slot based on acquisition of the first slot. When an access signal is received from any one of the plurality of UEs in at least one predetermined OFDM symbol in the first slot, the first slot may be acquired based on that an index of the second subchannel has a lower priority than an index of at least one of the subchannels.

In another aspect of the present disclosure, there is provided a chipset configured to acquire a first slot including a plurality of subchannels in unlicensed bands in a wireless communication system supporting sidelink. The chipset may include: at least one processor; and at least one memory operably connected to the at least one processor and configured to, when executed, cause the at least one processor to perform operations. The operations may include: transmitting a first signal in licensed bands, wherein the first signal is to reserve the first slot and a first subchannel for the unlicensed bands; receiving, from a plurality of UEs, second signals for reserving non-overlapping subchannels in the first slot; and transmitting a third signal on the first subchannel and in the first slot based on acquisition of the first slot. Based on an index of the first subchannel having a higher priority than subchannels reserved by the plurality of UEs, the processor may be configured to perform LBT in the unlicensed bands to acquire the first slot on behalf of the plurality of UEs.

Alternatively, the processor may be configured to control a driving mode of a device connected to the chipset based on the first signal.

In a further aspect of the present disclosure, there is provided a computer-readable storage medium including at least one computer program configured to cause at least one processor to acquire a first slot including a plurality of subchannels in unlicensed bands in a wireless communication system supporting sidelink. The at least one computer program may be configured to cause the at least one processor to perform operations for acquiring the first slot, and the at least one computer program may be stored on the computer-readable storage medium. The operations may include: transmitting a first signal in licensed bands, wherein the first signal is to reserve the first slot and a first subchannel for the unlicensed bands; receiving, from a plurality of UEs, second signals for reserving non-overlapping subchannels in the first slot; and transmitting a third signal on the first subchannel and in the first slot based on acquisition of the first slot. Based on an index of the first subchannel having a higher priority than subchannels reserved by the plurality of UEs, the processor may be configured to perform LBT in the unlicensed bands to acquire the first slot on behalf of the plurality of UEs.

## ADVANTAGEOUS EFFECTS

According to various embodiments, a representative user equipment (UE) may be determined from among UEs performing sidelink communication, based on the index of a subchannel, and the representative UE may efficiently perform Listen-Before-Talk (LBT) in unlicensed bands without involvement of a base station.

Effects to be achieved by various embodiments are not limited to what has been particularly described hereinabove and other effects not mentioned herein will be more clearly understood by persons skilled in the art to which the present disclosure pertains from the following detailed description.

## BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 is a diagram for explaining by comparing V2X communication based on RAT before NR and V2X communication based on NR.

FIG. 2 illustrates the structure of an LTE system.

FIG. 3 illustrates the structure of an NR system.

FIG. 4 illustrates the structure of an NR radio frame.

FIG. 5 illustrates the slot structure of an NR frame.

FIG. 6 illustrates a radio protocol architecture for SL communication.

FIG. 7 illustrates UEs performing V2X or SL communication.

FIG. 8 illustrates resource units for V2X or SL communication.

FIG. 9 illustrates a procedure in which UEs perform V2X or SL communication according to a transmission mode

FIG. 10 illustrates an Observed Time Difference of Arrival (OTDOA) positioning method to which the present disclosure is applicable.

FIGS. 11 and 12 are diagrams for explaining a method of configuring channel occupancy time (COT) slots.

FIG. 13 is a diagram for explaining the structure of a COT slot for a sidelink channel access procedure (SL-CAP).

FIG. 14 is a diagram for explaining an SL-CAP method for a contention user equipment (C-UE) to perform listen-before-talk (LBT).

FIGS. 15 and 16 are diagrams for explaining the structure of a COT slot in consideration of access signal transmission from a C-UE.

FIG. 17 is a diagram for explaining the structure of a COT slot for supporting a time division multiplexing based (TDM-based) SL-CAP.

FIG. 18 is a diagram for explaining a method in which a UE obtains a COT slot by performing LBT in unlicensed bands.

FIG. 19 is a flowchart illustrating a method for a first UE to acquire a first slot for unlicensed bands.

FIG. 20 is a flowchart for explaining a method for a second UE to acquire a first slot for unlicensed bands.

FIG. 21 illustrates a communication system applied to the present disclosure.

FIG. 22 illustrates wireless devices applicable to the present disclosure.

FIG. 23 illustrates another example of a wireless device to which the present disclosure is applied. The wireless device may be implemented in various forms according to use-examples/services.

FIG. 24 illustrates a vehicle or an autonomous driving vehicle applied to the present disclosure.

## DETAILED DESCRIPTION

The wireless communication system is a multiple access system that supports communication with multiple users by sharing available system resources (e.g., bandwidth, transmission power, etc.). Examples of the multiple access system include a code division multiple access (CDMA) system, a frequency division multiple access (FDMA) system, a time division multiple access (TDMA) system, an orthogonal frequency division multiple access (OFDMA) system, a single carrier frequency (SC-FDMA) system, a multi carrier frequency division multiple access (MC-FDMA) system, and the like.

A sidelink refers to a communication scheme in which a direct link is established between user equipments (UEs) to directly exchange voice or data between UEs without assistance from a base station (BS). The sidelink is being considered as one way to address the burden on the BS caused by rapidly increasing data traffic.

Vehicle-to-everything (V2X) refers to a communication technology for exchanging information with other vehicles, pedestrians, and infrastructure-built objects through wired/wireless communication. V2X may be divided into four types: vehicle-to-vehicle (V2V), vehicle-to-infrastructure (V2I), vehicle-to-network (V2N), and vehicle-to-pedestrian (V2P). V2X communication may be provided through a PC5 interface and/or a Uu interface.

As more and more communication devices require larger communication capacities in transmitting and receiving signals, there is a need for mobile broadband communication improved from the legacy radio access technology. Accordingly, communication systems considering services/UEs sensitive to reliability and latency are under discussion. A next-generation radio access technology in consideration of enhanced mobile broadband communication, massive MTC, and Ultra-Reliable and Low Latency Communication (URLLC) may be referred to as new radio access technology (RAT) or new radio (NR). Even in NR, V2X communication may be supported.

Techniques described herein may be used in various wireless access systems such as code division multiple access (CDMA), frequency division multiple access (FDMA), time division multiple access (TDMA), orthogonal frequency division multiple access (OFDMA), single carrier-frequency division multiple access (SC-FDMA), etc. CDMA may be implemented as a radio technology such as universal terrestrial radio access (UTRA) or CDMA2000. TDMA may be implemented as a radio technology such as global system for mobile communications (GSM)/general packet radio service (GPRS)/Enhanced Data Rates for GSM Evolution (EDGE). OFDMA may be implemented as a radio technology such as IEEE 802.11 (Wi-Fi), IEEE 802.16 (WiMAX), IEEE 802.20, evolved-UTRA (E-UTRA) etc. IEEE 802.16m is an evolution of IEEE 802.16e and provides backward compatibility with a system based on IEEE 802.16e. UTRA is a part of universal mobile telecommunications system (UMTS). 3GPP LTE is a part of Evolved UMTS (E-UMTS) using E-UTRA. 3GPP LTE employs OFDMA for downlink and SC-FDMA for uplink. LTE-A is an evolution of 3GPP LTE.

5G NR is a successor technology of LTE-A, and is a new clean-slate mobile communication system with characteristics such as high performance, low latency, and high availability. 5G NR may utilize all available spectrum resources, from low frequency bands below 1 GHz to intermediate frequency bands from 1 GHz to 10 GHz and high frequency (millimeter wave) bands above 24 GHz.

For clarity of explanation, LTE-A or 5G NR is mainly described, but the technical spirit of the embodiment(s) is not limited thereto

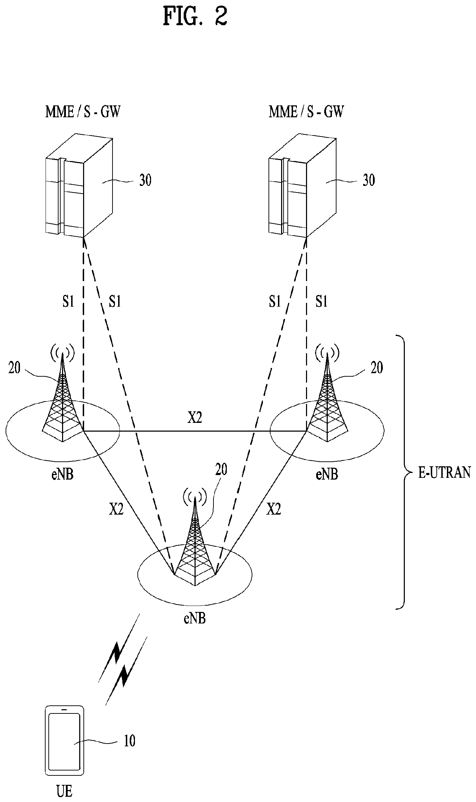

FIG. 2 illustrates the structure of an LTE system to which the present disclosure is applicable. This may also be called an evolved UMTS terrestrial radio access network (E-UTRAN) or LTE/LTE-A system.

Referring to FIG. 2, the E-UTRAN includes evolved Node Bs (eNBs) 20 which provide a control plane and a user plane to UEs 10. A UE 10 may be fixed or mobile and may also be referred to as a mobile station (MS), user terminal (UT), subscriber station (SS), mobile terminal (MT), or wireless device. An eNB 20 is a fixed station communication with the UE 10 and may also be referred to as a base station (BS), a base transceiver system (BTS), or an access point.

eNBs 20 may be connected to each other via an X2 interface. An eNB 20 is connected to an evolved packet core (EPC) 39 via an S1 interface. More specifically, the eNB 20 is connected to a mobility management entity (MME) via an S1-MME interface and to a serving gateway (S-GW) via an S1-U interface.

The EPC 30 includes an MME, an S-GW, and a packet data network-gateway (P-GW). The MME has access information or capability information about UEs, which are mainly used for mobility management of the UEs. The S-GW is a gateway having the E-UTRAN as an end point, and the P-GW is a gateway having a packet data network (PDN) as an end point.

Based on the lowest three layers of the open system interconnection (OSI) reference model known in communication systems, the radio protocol stack between a UE and a network may be divided into Layer 1 (L1), Layer 2 (L2) and Layer 3 (L3). These layers are defined in pairs between a UE and an Evolved UTRAN (E-UTRAN), for data transmission via the Uu interface. The physical (PHY) layer at L1 provides an information transfer service on physical channels. The radio resource control (RRC) layer at L3 functions to control radio resources between the UE and the network. For this purpose, the RRC layer exchanges RRC messages between the UE and an eNB.

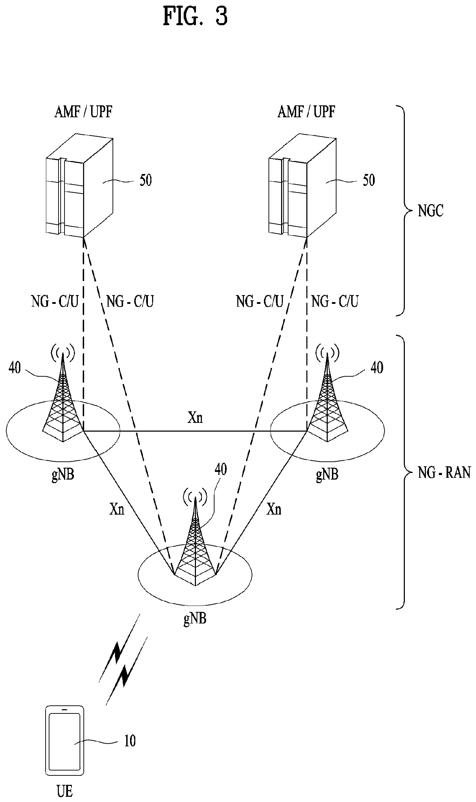

FIG. 3 illustrates the structure of a NR system to which the present disclosure is applicable.

Referring to FIG. 3, a next generation radio access network (NG-RAN) may include a next generation Node B (gNB) and/or an eNB, which provides user-plane and control-plane protocol termination to a UE. In FIG. 3, the NG-RAN is shown as including only gNBs, by way of example. A gNB and an eNB are connected to each other via an Xn interface. The gNB and the eNB are connected to a 5G core network (5GC) via an NG interface. More specifically, the gNB and the eNB are connected to an access and mobility management function (AMF) via an NG-C interface and to a user plane function (UPF) via an NG-U interface.

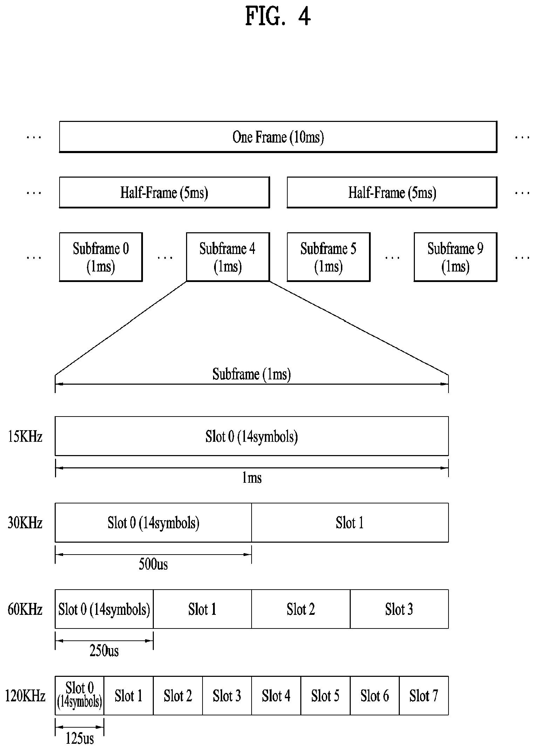

FIG. 4 illustrates the structure of a NR radio frame to which the present disclosure is applicable.

Referring to FIG. 4, a radio frame may be used for uplink (UL) transmission and downlink (DL) transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

In a normal CP (NCP) case, each slot may include 14 symbols, whereas in an extended CP (ECP) case, each slot may include 12 symbols. Herein, a symbol may be an OFDM symbol (or CP-OFDM symbol) or an SC-FDMA symbol (or DFT-s-OFDM symbol).

Table 1 below lists the number of symbols per slot ($N^{slot}_{symb}$), the number of slots per frame ($N^{frame,u}_{slot}$), and the number of slots per subframe ($N^{subframe,u}_{slot}$) according to an SCS configuration $\mu$ in the NCP case.

[Table 1]

| SCS ($15*2^u$) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |

Table 2 below lists the number of symbols per slot, the number of slots per frame, and the number of slots per subframe according to an SCS in the ECP case.

[Table 2]

| SCS ($15*2^u$) | $N^{slot}_{symb}$ | $N^{frame,u}_{slot}$ | $N^{subframe,u}_{slot}$ |
|---|---|---|---|
| 60 kHz (u=2) | 12 | 40 | 4 |

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

In NR, multiple numerologies or SCSs to support various 5G services may be supported. For example, a wide area in conventional cellular bands may be supported when the SCS is 15 kHz, and a dense urban environment, lower latency, and a wider carrier bandwidth may be supported when the SCS is 30 kHz/60 kHz. When the SCS is 60 kHz or higher, a bandwidth wider than 24.25 GHz may be supported to overcome phase noise.

The NR frequency band may be defined as two types of frequency ranges. The two types of frequency ranges may be FR1 and FR2. The numerical values of the frequency ranges may be changed. For example, the two types of frequency ranges may be configured as shown in Table 3 below. Among the frequency ranges used in the NR system, FR1 may represent "sub 6 GHz range" and FR2 may represent "above 6 GHz range" and may be called millimeter wave (mmW).

[Table 3]

| Frequency Range designation | Corresponding frequency range | Subcarrier Spacing (SCS) |
|---|---|---|
| FR1 | 450 MHz - 6000 MHz | 15, 30, 60 kHz |
| FR2 | 24250 MHz - 52600 MHz | 60, 120, 240 kHz |

As mentioned above, the numerical values of the frequency ranges of the NR system may be changed. For example, FR1 may include a band of 410 MHz to 7125 MHz as shown in Table 4 below. That is, FR1 may include a frequency band of 6 GHz (or 5850 MHz, 5900 MHz, 5925 MHz, etc.) or higher. For example, the frequency band of 6 GHz (or 5850 MHz, 5900 MHz, 5925 MHz, etc.) or higher included in FR1 may include an unlicensed band. The unlicensed band may be used for various purposes, for example, for communication for vehicles (e.g., autonomous driving).

[Table 4]

| Frequency Range designation | Corresponding frequency range | Subcarrier Spacing (SCS) |
|---|---|---|
| FR1 | 410 MHz - 7125 MHz | 15, 30, 60 kHz |
| FR2 | 24250 MHz - 52600 MHz | 60, 120, 240 kHz |

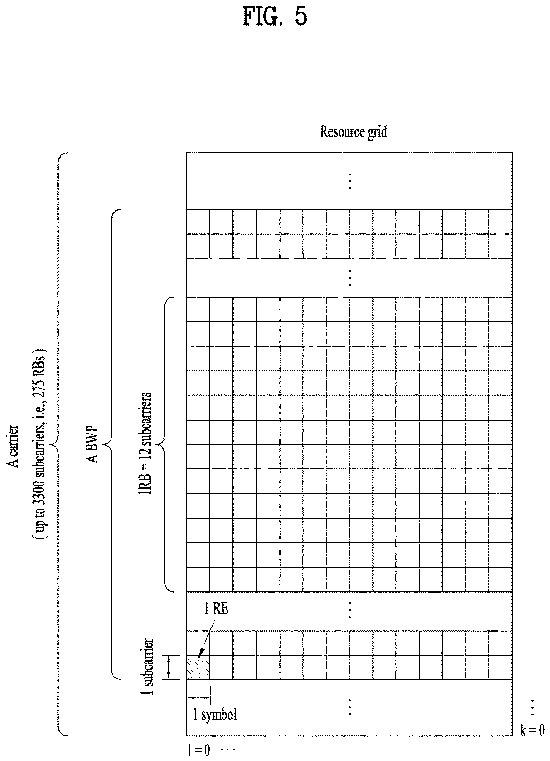

FIG. 5 illustrates the slot structure of a NR frame to which the present disclosure is applicable.

Referring to FIG. 5, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP.

A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

The wireless interface between UEs or the wireless interface between a UE and a network may be composed of an L1 layer, an L2 layer, and an L3 layer. In various embodiments of the present disclosure, the L1 layer may represent a physical layer. The L2 layer may represent, for example, at least one of a MAC layer, an RLC layer, a PDCP layer, and an SDAP layer. The L3 layer may represent, for example, an RRC layer.

Hereinafter, V2X or sidelink (SL) communication will be described.

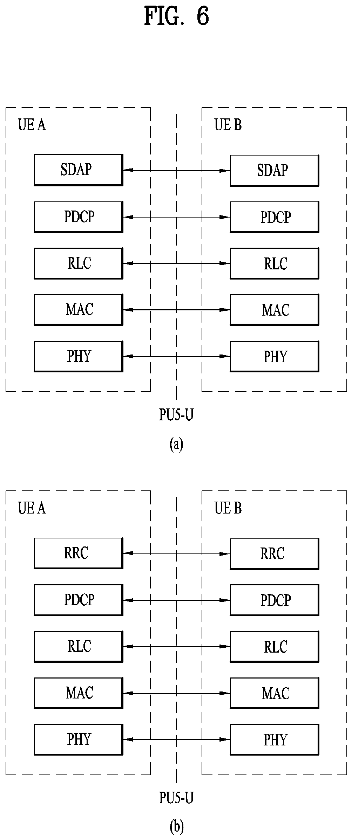

FIG. 6 illustrates a radio protocol architecture for SL communication. Specifically, FIG. 6-(a) shows a user plane protocol stack of NR, and FIG. 6-(b) shows a control plane protocol stack of NR.

Hereinafter, a sidelink synchronization signal (SLSS) and synchronization information will be described.

The SLSS is an SL-specific sequence, and may include a primary sidelink synchronization signal (PSSS) and a secondary sidelink synchronization signal (SSSS). The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, the UE may detect an initial signal and acquire synchronization using the S-PSS. For example, the UE may acquire detailed synchronization using the S-PSS and the S-SSS, and may detect a synchronization signal ID.

A physical sidelink broadcast channel (PSBCH) may be a (broadcast) channel on which basic (system) information that the UE needs to know first before transmission and reception of an SL signal is transmitted. For example, the basic information may include SLSS related information, a duplex mode (DM), time division duplex uplink/downlink (TDD UL/DL) configuration, resource pool related information, the type of an application related to the SLSS, a subframe offset, and broadcast information. For example, for evaluation of PSBCH performance, the payload size of PSBCH in NR V2X may be 56 bits including CRC of 24 bits.

The S-PSS, S-SSS, and PSBCH may be included in a block format (e.g., an SL synchronization signal (SS)/PSBCH block, hereinafter sidelink-synchronization signal block (S-SSB)) supporting periodic transmission. The S-SSB may have the same numerology (i.e., SCS and CP length) as a physical sidelink control channel (PSCCH)/physical sidelink shared channel (PSSCH) in the carrier, and the transmission bandwidth thereof may be within a (pre)set sidelink BWP (SL BWP). For example, the bandwidth of the S-SSB may be 11 resource blocks (RBs). For example, the PSBCH may span 11 RBs. The frequency position of the S-SSB may be (pre)set. Accordingly, the UE does not need to perform hypothesis detection at a frequency to discover the S-SSB in the carrier.

In the NR SL system, a plurality of numerologies having different SCSs and/or CP lengths may be supported. In this case, as the SCS increases, the length of the time resource in which the transmitting UE transmits the S-SSB may be shortened. Thereby, the coverage of the S-SSB may be narrowed. Accordingly, in order to guarantee the coverage of the S-SSB, the transmitting UE may transmit one or more S-SSBs to the receiving UE within one S-SSB transmission period according to the SCS. For example, the number of S-SSBs that the transmitting UE transmits to the receiving UE within one S-SSB transmission period may be pre-configured or configured for the transmitting UE. For example, the S-SSB transmission period may be 160 ms. For example, for all SCSs, the S-SSB transmission period of 160 ms may be supported.

For example, when the SCS is 15 kHz in FR1, the transmitting UE may transmit one or two S-SSBs to the receiving UE within one S-SSB transmission period. For example, when the SCS is 30 kHz in FR1, the transmitting UE may transmit one or two S-SSBs to the receiving UE within one S-SSB transmission period. For example, when the SCS is 60 kHz in FR1, the transmitting UE may transmit one, two, or four S-SSBs to the receiving UE within one S-SSB transmission period.

For example, when the SCS is 60 kHz in FR2, the transmitting UE may transmit 1, 2, 4, 8, 16 or 32 S-SSBs to the receiving UE within one S-SSB transmission period. For example, when SCS is 120 kHz in FR2, the transmitting UE may transmit 1, 2, 4, 8, 16, 32 or 64 S-SSBs to the receiving UE within one S-SSB transmission period.

When the SCS is 60 kHz, two types of CPs may be supported. In addition, the structure of the S-SSB transmitted from the transmitting UE to the receiving UE may depend on the CP type. For example, the CP type may be normal CP (NCP) or extended CP (ECP). Specifically, for example, when the CP type is NCP, the number of symbols to which the PSBCH is mapped in the S-SSB transmitted by the transmitting UE may be 9 or 8. On the other hand, for example, when the CP type is ECP, the number of symbols to which the PSBCH is mapped in the S-SSB transmitted by the transmitting UE may be 7 or 6. For example, the PSBCH may be mapped to the first symbol in the S-SSB transmitted by the transmitting UE. For example, upon receiving the S-SSB, the receiving UE may perform an automatic gain control (AGC) operation in the period of the first symbol for the S-SSB.

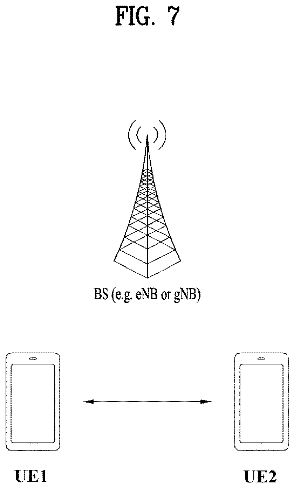

FIG. 7 illustrates UEs performing V2X or SL communication.

Referring to FIG. 7, in V2X or SL communication, the term UE may mainly refer to a user's UE. However, when network equipment such as a BS transmits and receives signals according to a communication scheme between UEs, the BS may also be regarded as a kind of UE. For example, UE 1 may be the first device 100, and UE 2 may be the second device 200.

For example, UE 1 may select a resource unit corresponding to a specific resource in a resource pool, which represents a set of resources. Then, UE 1 may transmit an SL signal through the resource unit. For example, UE 2, which is a receiving UE, may receive a configuration of a resource pool in which UE 1 may transmit a signal, and may detect a signal of UE 1 in the resource pool.

Here, when UE 1 is within the connection range of the BS, the BS may inform UE 1 of a resource pool. On the other hand, when the UE 1 is outside the connection range of the BS, another UE may inform UE 1 of the resource pool, or UE 1 may use a preconfigured resource pool.

In general, the resource pool may be composed of a plurality of resource units, and each UE may select one or multiple resource units and transmit an SL signal through the selected units.

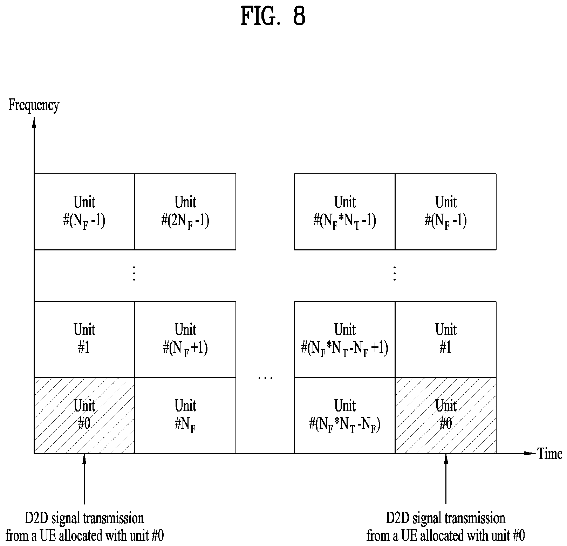

FIG. 8 illustrates resource units for V2X or SL communication.

Referring to FIG. 8, the frequency resources of a resource pool may be divided into NF sets, and the time resources of the resource pool may be divided into NT sets. Accordingly, a total of NF * NT resource units may be defined in the resource pool. FIG. 8 shows an exemplary case where the resource pool is repeated with a periodicity of NT subframes.

As shown in FIG. 8, one resource unit (e.g., Unit #0) may appear periodically and repeatedly. Alternatively, in order to obtain a diversity effect in the time or frequency dimension, an index of a physical resource unit to which one logical resource unit is mapped may change in a predetermined pattern over time. In this structure of resource units, the resource pool may represent a set of resource units available to a UE which intends to transmit an SL signal.

Resource pools may be subdivided into several types. For example, according to the content in the SL signal transmitted in each resource pool, the resource pools may be divided as follows.

(1) Scheduling assignment (SA) may be a signal including information such as a position of a resource through which a transmitting UE transmits an SL data channel, a modulation and coding scheme (MCS) or multiple input multiple output (MIMO) transmission scheme required for demodulation of other data channels, and timing advance (TA). The SA may be multiplexed with SL data and transmitted through the same resource unit. In this case, an SA resource pool may represent a resource pool in which SA is multiplexed with SL data and transmitted. The SA may be referred to as an SL control channel.
(2) SL data channel (physical sidelink shared channel (PSSCH)) may be a resource pool through which the transmitting UE transmits user data. When the SA and SL data are multiplexed and transmitted together in the same resource unit, only the SL data channel except for the SA information may be transmitted in the resource pool for the SL data channel. In other words, resource elements (REs) used to transmit the SA information in individual resource units in the SA resource pool may still be used to transmit the SL data in the resource pool of the SL data channel. For example, the transmitting UE may map the PSSCH to consecutive PRBs and transmit the same.
(3) The discovery channel may be a resource pool used for the transmitting UE to transmit information such as the ID thereof. Through this channel, the transmitting UE may allow a neighboring UE to discover the transmitting UE.

Even when the SL signals described above have the same content, they may use different resource pools according to the transmission/reception properties of the SL signals. For example, even when the SL data channel or discovery message is the same among the signals, it may be classified into different resource pools according to determination of the SL signal transmission timing (e.g., transmission at the reception time of the synchronization reference signal or transmission by applying a predetermined TA at the reception time), a resource allocation scheme (e.g., the BS designates individual signal transmission resources to individual transmitting UEs or individual transmission UEs select individual signal transmission resources within the resource pool), signal format (e.g., the number of symbols occupied by each SL signal in a subframe, or the number of subframes used for transmission of one SL signal), signal strength from a BS, the strength of transmit power of an SL UE, and the like.

Hereinafter, resource allocation in the SL will be described.

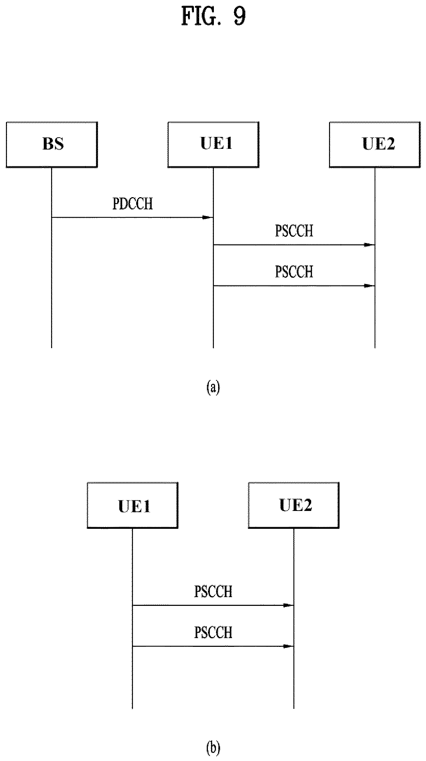

FIG. 9 illustrates a procedure in which UEs perform V2X or SL communication according to a transmission mode. In various embodiments of the present disclosure, the transmission mode may be referred to as a mode or a resource allocation mode. Hereinafter, for simplicity, the transmission mode in LTE may be referred to as an LTE transmission mode, and the transmission mode in NR may be referred to as an NR resource allocation mode.

For example, FIG. 9-(a) illustrates a UE operation related to LTE transmission mode 1 or LTE transmission mode 3. Alternatively, for example, FIG. 9-(a) illustrates a UE operation related to NR resource allocation mode 1. For example, LTE transmission mode 1 may be applied to general SL communication, and LTE transmission mode 3 may be applied to V2X communication.

For example, FIG. 9-(b) illustrates a UE operation related to LTE transmission mode 2 or LTE transmission mode 4. Alternatively, for example, FIG. 9-(b) illustrates a UE operation related to NR resource allocation mode 2.

Referring to FIG. 9-(a), in LTE transmission mode 1, LTE transmission mode 3 or NR resource allocation mode 1, the BS may schedule an SL resource to be used by the UE for SL transmission. For example, the BS may perform resource scheduling for UE 1 through PDCCH (more specifically, downlink control information (DCI)), and UE 1 may perform V2X or SL communication with UE 2 according to the resource scheduling. For example, UE 1 may transmit sidelink control information (SCI) to UE 2 on a physical sidelink control channel (PSCCH), and then transmit data which is based on the SCI to UE 2 on a physical sidelink shared channel (PSSCH).

For example, in NR resource allocation mode 1, the UE may be provided with or allocated resources for one or more SL transmissions of a transport block (TB) from the BS through a dynamic grant. For example, the BS may provide a resource for transmission of the PSCCH and/or PSSCH to the UE using the dynamic grant. For example, the transmitting UE may report the SL hybrid automatic repeat request (HARQ) feedback received from the receiving UE to the BS. In this case, the PUCCH resource and timing for reporting the SL HARQ feedback to the BS may be determined based on an indication in the PDCCH through the BS is to allocate a resource for SL transmission.

For example, DCI may include a slot offset between DCI reception and the first SL transmission scheduled by the DCI. For example, the minimum gap between the DCI scheduling a SL transmission resource and the first scheduled SL transmission resource may not be shorter than the processing time of the corresponding UE.

For example, in NR resource allocation mode 1, the UE may be periodically provided with or allocated a resource set from the BS for a plurality of SL transmissions through a configured grant. For example, the configured grant may include configured grant type 1 or configured grant type 2. For example, the UE may determine a TB to be transmitted in each occasion indicated by a given configured grant.

For example, the BS may allocate SL resources to the UE on the same carrier, and may allocate SL resources to the UE on different carriers.

For example, an NR BS may control LTE-based SL communication. For example, the NR BS may transmit NR DCI to the UE to schedule an LTE SL resource. In this case, for example, a new RNTI for scrambling the NR DCI may be defined. For example, the UE may include an NR SL module and an LTE SL module.

For example, after the UE including the NR SL module and the LTE SL module receives NR SL DCI from the gNB, the NR SL module may transform the NR SL DCI to LTE DCI type 5A, and the NR SL module may deliver LTE DCI type 5A to the LTE SL module in units of X ms. For example, the LTE SL module may apply activation and/or release to the first LTE subframe Z ms after the LTE SL module receives LTE DCI format 5A from the NR SL module. For example, the X may be dynamically indicated using a field of DCI. For example, the minimum value of X may depend on the UE capability. For example, the UE may report a single value according to the UE capability. For example, X may be a positive number.

Referring to FIG. 9-(b), in LTE transmission mode 2, LTE transmission mode 4, or NR resource allocation mode 2, the UE may determine AN SL resource within the SL resources configured by the BS/network or the preconfigured SL resources. For example, the configured SL resources or the preconfigured SL resources may be a resource pool. For example, the UE may autonomously select or schedule a resource for SL transmission. For example, the UE may autonomously select a resource within the configured resource pool to perform SL communication. For example, the UE may select a resource within a selection window by performing a sensing and resource (re)selection procedure. For example, the sensing may be performed on a per sub-channel basis. In addition, UE 1, which has selected a resource within the resource pool, may transmit SCI to UE 2 through the PSCCH, and then transmit data, which is based on the SCI, to UE 2 through the PSSCH.

For example, a UE may assist in selecting an SL resource for another UE. For example, in NR resource allocation mode 2, the UE may receive a configured grant for SL transmission. For example, in NR resource allocation mode 2, the UE may schedule SL transmission of another UE. For example, in NR resource allocation mode 2, the UE may reserve an SL resource for blind retransmission.

For example, in NR resource allocation mode 2, UE 1 may indicate the priority of SL transmission to UE 2 using the SCI. For example, UE 2 may decode the SCI. UE 2 may perform sensing and/or resource (re)selection based on the priority. For example, the resource (re)selection procedure may include an operation of identifying candidate resources in a resource selection window by UE 2, and an operation of selecting, by UE 2, a resource for (re)transmission from among the identified candidate resources. For example, the resource selection window may be a time interval during which the UE selects the resource for SL transmission. For example, after UE 2 triggers resource (re)selection, the resource selection window may start at $T1 \geq 0$. The resource selection window may be limited by the remaining packet delay budget of UE 2. For example, in the operation of identifying the candidate resources in the resource selection window by UE 2, a specific resource may be indicated by the SCI received by UE 2 from UE 1. When the L1 SL RSRP measurement value for the specific resource exceeds an SL RSRP threshold, UE 2 may not determine the specific resource as a candidate resource. For example, the SL RSRP threshold may be determined based on the priority of the SL transmission indicated by the SCI received by UE 2 from UE 1 and the priority of the SL transmission on the resource selected by UE 2.

For example, the L1 SL RSRP may be measured based on an SL demodulation reference signal (DMRS). For example, one or more PSSCH DMRS patterns may be configured or preconfigured for each resource pool in the time domain. For example, PDSCH DMRS configuration type 1 and/or type 2 may be the same as or similar to the frequency domain pattern of the PSSCH DMRS. For example, the exact DMRS pattern may be indicated by the SCI. For example, in NR resource allocation mode 2, the transmitting UE may select a specific DMRS pattern from among DMRS patterns configured or preconfigured for the resource pool.

For example, in NR resource allocation mode 2, based on the sensing and resource (re)selection procedure, the transmitting UE may perform initial transmission of a TB without reservation. For example, based on the sensing and resource (re)selection procedure, using the SCI associated with a first TB, the transmitting UE may reserve the SL resource for initial transmission of a second TB.

For example, in NR resource allocation mode 2, the UE may reserve a resource for feedback-based PSSCH retransmission through signaling related to previous transmission of the same TB. For example, the maximum number of SL resources reserved by one transmission including the current transmission may be 2, 3, or 4. For example, the maximum number of SL resources may be the same regardless of whether HARQ feedback is enabled. For example, the maximum number of HARQ (re)transmissions for one TB may be limited by configuration or pre-configuration. For example, the maximum number of HARQ (re)transmissions may be up to 32. For example, when the configuration or pre-configuration is not present, the maximum number of HARQ (re)transmissions may be unspecified. For example, the configuration or pre-configuration may be for the transmitting UE. For example, in NR resource allocation mode 2, HARQ feedback for releasing resources not used by the UE may be supported.

For example, in NR resource allocation mode 2, the UE may indicate to another UE one or more sub-channels and/or slots used by the UE, using the SCI. For example, the UE may indicate to another UE one or more sub-channels and/or slots reserved by the UE for PSSCH (re)transmission, using SCI. For example, the minimum allocation unit of the SL resource may be a slot. For example, the size of the sub-channel may be configured for the UE or may be preconfigured.

Hereinafter, sidelink control information (SCI) will be described.

Control information transmitted by the BS to the UE on the PDCCH may be referred to as downlink control information (DCI), whereas control information transmitted by the UE to another UE on the PSCCH may be referred to as SCI. For example, before decoding the PSCCH, the UE may be aware of the start symbol of the PSCCH and/or the number of symbols of the PSCCH. For example, the SCI may include SL scheduling information. For example, the UE may transmit at least one SCI to another UE to schedule the PSSCH. For example, one or more SCI formats may be defined.

For example, the transmitting UE may transmit the SCI to the receiving UE on the PSCCH. The receiving UE may decode one SCI to receive the PSSCH from the transmitting UE.

For example, the transmitting UE may transmit two consecutive SCIs (e.g., 2-stage SCI) to the receiving UE on the PSCCH and/or the PSSCH. The receiving UE may decode the two consecutive SCIs (e.g., 2-stage SCI) to receive the PSSCH from the transmitting UE. For example, when the SCI configuration fields are divided into two groups in consideration of the (relatively) high SCI payload size, the SCI including a first SCI configuration field group may be referred to as first SCI or 1st SCI, and the SCI including a second SCI configuration field group may be referred to as second SCI or 2nd SCI. For example, the transmitting UE may transmit the first SCI to the receiving UE on the PSCCH. For example, the transmitting UE may transmit the second SCI to the receiving UE on the PSCCH and/or the PSSCH. For example, the second SCI may be transmitted to the receiving UE on the (independent) PSCCH, or may be piggybacked together with data and transmitted on the PSSCH. For example, the two consecutive SCIs may be applied for different transmissions (e.g., unicast, broadcast, or groupcast).

For example, the transmitting UE may transmit some or all of the following information to the receiving UE through SCI. Here, for example, the transmitting UE may transmit some or all of the following information to the receiving UE through the first SCI and/or the second SCI:

- PSSCH and/or PSCCH related resource allocation information, for example, the positions/number of time/frequency resources, resource reservation information (e.g., periodicity); and/or
- SL CSI report request indicator or SL (L1) RSRP (and/or SL (L1) RSRQ and/or SL (L1) RSSI) report request indicator; and/or
- SL CSI transmission indicator (or SL (L1) RSRP (and/or SL (L1) RSRQ and/or SL (L1) RSSI) information transmission indicator) (on PSSCH); and/or
- MCS information; and/or
- transmit power information; and/or
- L1 destination ID information and/or L1 source ID information; and/or
- SL HARQ process ID information; and/or
- new data indicator (NDI) information; and/or
- redundancy version (RV) information; and/or
- (transmission traffic/packet related) QoS information; e.g., priority information; and/or
- SL CSI-RS transmission indicator or information on the number of (transmitted) SL CSI-RS antenna ports;
- Location information about the transmitting UE or location (or distance/area) information about a target receiving UE (to which a request for SL HARQ feedback is made); and/or
- information about a reference signal (e.g., DMRS, etc.) related to decoding and/or channel estimation of data transmitted on the PSSCH, for example, information related to a pattern of a (time-frequency) mapping resource of DMRS, rank information, antenna port index information.

For example, the first SCI may include information related to channel sensing. For example, the receiving UE may decode the second SCI using the PSSCH DMRS. A polar code used for the PDCCH may be applied to the second SCI. For example, in the resource pool, the payload size of the first SCI may be the same for unicast, groupcast and broadcast. After decoding the first SCI, the receiving UE does not need to perform blind decoding of the second SCI.

For example, the first SCI may include scheduling information about the second SCI.

In various embodiments of the present disclosure, since the transmitting UE may transmit at least one of SCI, the first SCI, and/or the second SCI to the receiving UE on the PSCCH, the PSCCH may be replaced/substituted with at least one of the SCI, the first SCI, and/or the second SCI. Additionally/alternatively, for example, the SCI may be replaced/substituted with at least one of the PSCCH, the first SCI, and/or the second SCI. Additionally/alternatively, for example, since the transmitting UE may transmit the second SCI to the receiving UE on the PSSCH, the PSSCH may be replaced/substituted with the second SCI.

Hereinafter, synchronization acquisition by an SL UE will be described.

In TDMA and FDMA systems, accurate time and frequency synchronization is essential. Inaccurate time and frequency synchronization may lead to degradation of system performance due to inter-symbol interference (ISI) and inter-carrier interference (ICI). The same is true for V2X. For time/frequency synchronization in V2X, a sidelink synchronization signal (SLSS) may be used in the PHY layer, and master information block-sidelink-V2X (MIB-SL-V2X) may be used in the RLC layer.

## Tx/Rx beam sweep

In case of using a very high frequency such as mmWave, beamforming may be used to overcome pathloss in general. To use beamforming, a best beam pair should be detected from several beam pairs between a Tx end and an Rx end. Such a process may be referred as beam acquisition or beam tracking from the perspective of the Rx end. Particularly, since mmWave uses analog beamforming, a vehicle may need to perform beam sweeping of switching a beam to a different direction in a different time using an antenna array of the vehicle in the course of beam acquisition or beam tracking.

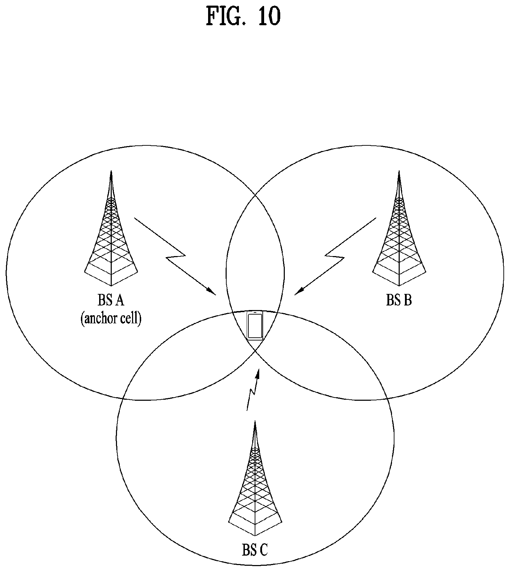

FIG. 10 is a diagram illustrating an OTDOA positioning method according to an embodiment of the present disclosure.

In the OTDOA positioning method, a UE utilizes measurement timings of DL signals received from multiple TPs including an eNB, an ng-eNB, and a PRS-dedicated TP. The UE measures the timings of the received DL signals using positioning assistance data received from a location server. The location of the UE may be determined based on the measurement results and the geographical coordinates of neighboring TPs.

A UE connected to a gNB may request a measurement gap for OTDOA measurement from a TP. When the UE fails to identify a single frequency network (SFN) for at least one TP in OTDOA assistance data, the UE may use an autonomous gap to acquire the SFN of an OTDOA reference cell before requesting a measurement gap in which a reference signal time difference (RSTD) is measured.

An RSTD may be defined based on a smallest relative time difference between the boundaries of two subframes received from a reference cell and a measurement cell. That is, the RSTD may be calculated as a relative timing difference between a time when the UE receives the start of a subframe from the reference cell and a time when the UE receives the start of a subframe from the measurement cell which is closest to the subframe received from the reference cell. The reference cell may be selected by the UE.

For accurate OTDOA measurement, it is necessary to measure the times of arrival (TOAs) of signals received from three or more geographically distributed TPs or BSs. For example, TOAs for TP 1, TP 2, and TP 3 may be measured, an RSTD for TP 1-TP 2, an RSTD for TP 2-TP 3, and an RSTD for TP 3-TP 1 may be calculated based on the three TOAs, geometric hyperbolas may be determined based on the calculated RSTDs, and a point where these hyperbolas intersect may be estimated as the location of the UE. Accuracy and/or uncertainty may be involved in each TOA measurement, and thus the estimated UE location may be known as a specific range according to the measurement uncertainty.

For example, an RSTD for two TPs may be calculated by Equation 1.

[Equation 1]

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Here, 'c' is the speed of light, $\{x_t, y_t\}$ is the (unknown) coordinates of the target UE, $\{x_i, y_i\}$ is the coordinates of a (known) TP, and $\{x_1, y_1\}$ is the coordinates of a reference TP (or another TP). $(T_i - T_1)$ is a transmission time offset between the two TPs, which may be referred to as "real time difference" (RTD), and '$n_i$' and '$n_1$' may represent values related to UE TOA measurement errors.

E-CID (Enhanced Cell ID): In cell ID (CID) positioning, the location of a UE may be measured based on geographic information about the serving ng-eNB, serving gNB and/or serving cell of the UE. For example, the geographic information about the serving ng-eNB, the serving gNB, and/or the serving cell may be obtained by paging, registration, or the like.

For E-CID positioning, an additional UE measurement and/or NG-RAN radio resources may be used to improve a UE location estimate in addition to the CID positioning method. In the E-CID positioning method, although some of the same measurement methods as in the measurement control system of the RRC protocol may be used, an additional measurement is generally not performed only for positioning the UE. In other words, a separate measurement configuration or measurement control message may not be provided to position the UE, and the UE may also report a measured value obtained by generally available measurement methods, without expecting that an additional measurement operation only for positioning will be requested.

For example, the serving gNB may implement the E-CID positioning method using an E-UTRA measurement received from the UE.

Exemplary measurement elements that are available for E-CID positioning are given as follows.

- UE measurements: E-UTRA RSRP, E-UTRA RSRQ, UE E-UTRA Rx-Tx time difference, GSM EDGE random access network (GERAN)/WLAN RSSI, UTRAN common pilot channel (CPICH) received signal code power (RSCP), and UTRAN CPICH Ec/Io.
- E-UTRAN measurements: ng-eNB Rx-Tx time difference, timing advance (TADV), and angle of arrival (AoA).

TADVs may be classified into Type 1 and Type 2 as follows.

$$\text{TADV Type 1} = (\text{ng-eNB Rx-Tx time difference}) + (\text{UE E-UTRA Rx-Tx time difference})$$

$$\text{TADV Type 2} = \text{ng-eNB Rx-Tx time difference}$$

On the other hand, an AoA may be used to measure the direction of the UE. The AoA may be defined as an estimated angle of the UE with respect to the location of the UE counterclockwise from a BS/TP. A geographical reference direction may be north. The BS/TP may use a UL signal such as a sounding reference signal (SRS) and/or a DMRS for AoA measurement. As the arrangement of antenna arrays is larger, the measurement accuracy of the AoA is higher. When the antenna arrays are arranged at the same interval, signals received at adjacent antenna elements may have a constant phase change (phase rotation).

UTDOA (Uplink Time Difference of Arrival): UTDOA is a method of determining the location of a UE by estimating the arrival time of an SRS. When the estimated SRS arrival time is calculated, a serving cell may be used as a reference cell to estimate the location of the UE based on the difference in arrival time from another cell (or BS/TP). In order to implement the UTDOA method, an E-SMLC may indicate the serving cell of a target UE to indicate SRS transmission to the target UE. Further, the E-SMLC may provide a configuration such as whether an SRS is periodic/aperiodic, a bandwidth, and frequency/group/sequence hopping.

In the current LTE/NR data communication system, not only DL/UL signal transmission in licensed bands but also DL/UL signal transmission in unlicensed bands are considered to improve the data transmission rate between the BS and UE. However, in the current LTE/NR V2X system, SL signal transmission between UEs in unlicensed bands is not considered.

Accordingly, the present disclosure proposes a new channel access procedure (CAP) technology to improve the data transmission rate between UEs in unlicensed bands and the frequency use efficiency in the LTE/NR V2X system.

**CAP for sidelink signal transmissions in unlicensed bands**

UEs may transmit SL signals (e.g., V2X data signal, positioning signal, V2X control signal, PSCCH, PSSCH, etc.) in unlicensed bands according to an access procedure or CAP in the unlicensed bands, which will be described later. Hereinafter, methods for UEs to perform the CAP in the SL system will be described in detail.

The terms related to the CAP used herein are defined as follows.

- UE: The term "UE" may include a vehicle, a robot, a mobile device, a device equipped with V2X modules, a road side unit (RSU), an Internet of Things (IoT) device, etc.
- Positioning: The term "positioning" may include round trip time (RTT) positioning, Time Difference of Arrival (TDoA) positioning, Angle of Arrival (AoA) positioning, Arrival of Departure (AoD) positioning, etc.

- Positioning signaling: The term "positioning signaling" refers to signaling required to perform positioning. The positioning signaling may be transmitted in V2X data packets and/or positioning-dedicated packets. In addition, the positioning signaling may be transmitted in unlicensed or licensed bands.
- Channel occupancy time (COT): The term "COT" refers to a channel resource occupancy time allowed for the UE to perform signal transmission in unlicensed bands.
- COT slot: The term "COT slot" refers to a slot defined within the COT. The slot boundary may be defined by the baseline time in licensed bands, and the slot structure may be defined to be the same as or similar to that in licensed bands.
- Contention UE (C-UE): The term "C-UE" refers to a UE that competes with neighboring heterogeneous UEs (e.g., Wi-Fi UEs) to acquire the COT (or channel resources in unlicensed bands) to be used by multiple UEs in a system where the multiple UEs transmit SL signals in the unlicensed bands for a certain period of time (e.g., slot, frame, or subframe) based on frequency division multiplexing/time division multiplexing (FDM/TDM). The C-UE may be selected from a plurality of UEs that reserve the use of the unlicensed bands. In addition, there may be one or more C-UEs.
- Non-contention UE (N-UE): The term "N-UE" refers to a UE except for the C-UE in a system where multiple UEs transmit SL signals in unlicensed bands for a certain period of time based on FDM/TDM. In this case, the N-UE that reserves the use of a COT slot (or channel resources in the unlicensed bands) may share/use the COT and channel resources acquired by the C-UE.
- V2X data on licensed bands: The term "V2X data on licensed bands" refers to V2X messages/data transmitted in licensed bands.
- V2X data on unlicensed bands): The term "V2X data on unlicensed bands" refers to V2X messages/data transmitted in unlicensed bands.
- Positioning signaling in licensed bands: The term "positioning signaling in licensed bands" refers to positioning signaling transmitted in licensed bands.
- Positioning signaling in unlicensed bands: The term "positioning signaling in unlicensed bands" refers to positioning signaling transmitted in unlicensed bands.
- Sidelink positioning reference signal (SL-PRS) in licensed bands: The term "SL-PRS in licensed bands" refers to an SL-PRS transmitted in licensed bands.
- SL-PRS in unlicensed bands: The term "SL-PRS in unlicensed bands" refers to an SL-PRS transmitted in unlicensed bands.
- Sidelink channel access procedure (SL-CAP): The term "SL-CAP" refers to a CAP for transmitting SL signals in unlicensed bands.
- Slot on licensed bands: The term "slot on licensed bands" refers to a slot defined in licensed bands.
- Slot on unlicensed bands: The term "slot on unlicensed bands" refers to a slot defined in unlicensed bands.

In relation to the above-described CAP, methods for multiple UEs to transmit SL signals in the same COT slot(s) in unlicensed bands based on FDM/TDM may be considered as follows.

Specifically, to enable multiple UEs to transmit SL signals in the same COT slot(s) in unlicensed bands based on FDM/TDM, the following methods are proposed: 1) a COT determination and COT configuration method; 2) an SL-CAP method in which all UEs that reserve the same COT slot transmit SL signals based on FDM after performing Listen-Before -Talk (LBT); 3) an SL-CAP method in which only C-UEs selected from among UEs that reserve the use of the same COT slot perform LBT and then all UEs including N-UEs transmit SL signals based on FDM; and/or 4) an SL-CAP method in which all UEs that reserve COT slots transmit SL signals based on TDM.

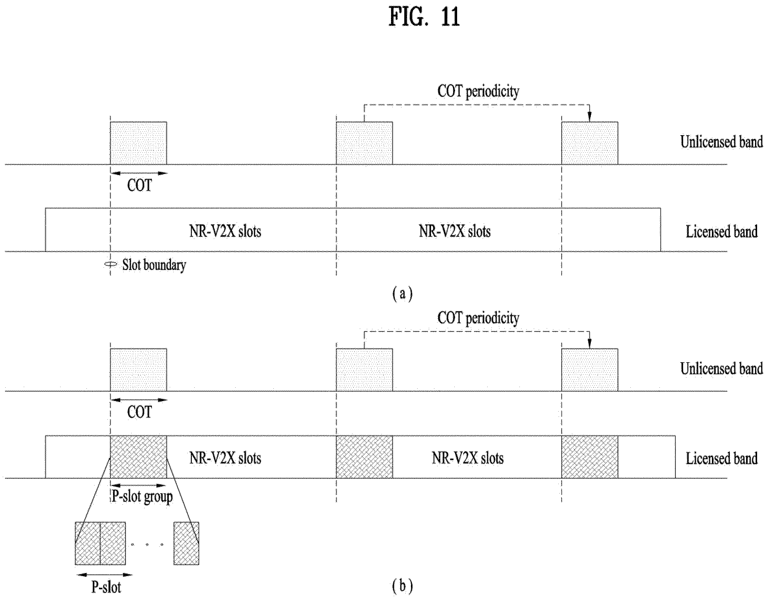

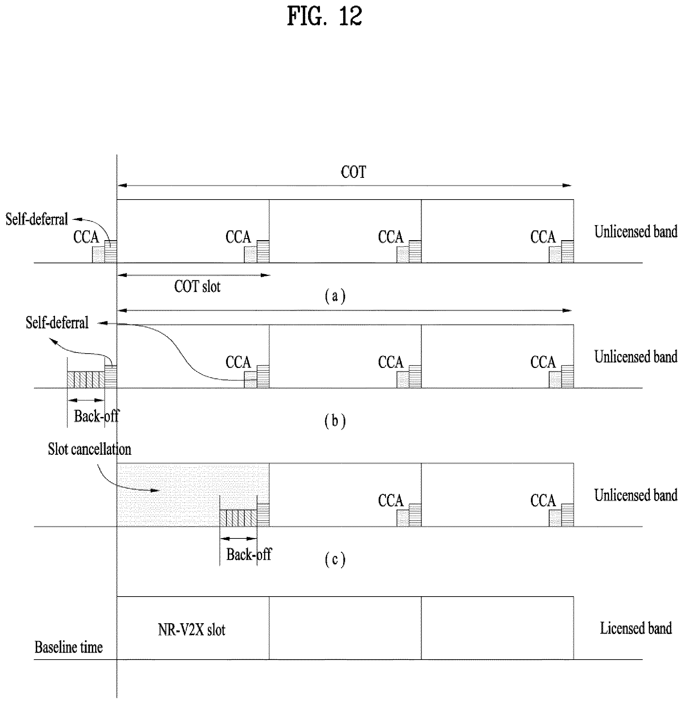

FIGS. 11 and 12 are diagrams for explaining a method of configuring COT slots.

1) COT determination and COT configuration method

Referring to FIG. 11, a UE or representative UE may determine the value of a COT slot (e.g., the size of a time resource) and configure the COT slot having the determined value based on the boundary of a time resource in licensed bands.

First, the size or value of the COT slot or COT may be determined according to the following methods.

The COT that the UE is capable of using for signal transmission in unlicensed bands may be determined according to a first COT determination method and/or a second COT determination method. The COT may be a time resource of "X" (ms) (e.g., X = 1, 4, 8, etc.).

The first COT determination method may be a method of determining the COT based on COT configuration information received from the BS, network, or location management function (LMF) (when the SL signal is a positioning signal). In other words, the BS, network, or LMF may determine the COT and provide configuration information related to the determined COT to UEs in licensed bands. The COT configuration information may be shared between multiple UEs. In this case, the value of "X", which is the COT variable (or the COT variable X included in the COT configuration information) may be transmitted along with an SIB, DCI on a PDCCH, a PDSCH, or 1st stage SCI, 2nd stage SCI, and/or data on a PSCCH/PSSCH.

The second COT determination method may be a method in which the UE autonomously determines the value of a variable related to the COT and transmits the determined variable value to neighboring UEs in licensed bands. A fixed UE (e.g., RSU) and/or the representative (or header) of a UE group may measure a channel busy ratio (CBR) in unlicensed bands to be used and then determine the COT in consideration of the CBR level. In other words, the representative UE or UE may determine the COT based on the CBR measured in the unlicensed bands and then transmit the determined COT to neighboring UEs or group members in the UE group. In this case, the value of "X", which is the COT variable (or the COT variable X included in the COT configuration information) may be transmitted along with 1st stage SCI, 2nd stage SCI, and/or data on a PSCCH/PSSCH.

Specifically, the UE or representative UE may adaptively determine the COT depending on the CBR. In this case, the maximum and minimum values of the CBR and the maximum and minimum values of the COT may be determined by the BS/network/LMF or may be predefined. For example, the UE or representative UE may change or adjust the value of the COT depending on changes in the CBR within the range of the maximum and minimum values of the COT. Alternatively, the COT may be selected from a predefined COT table based on the CBR level. For example, the UE or representative UE may receive information on COT values (COT table) for each CBR level and determine the COT matching with the measured CBR from the configured COT table.

Next, methods of configuring a COT or COT slot will be described.

The COT configuration method refers to a method of configuring the COT for SL signal transmission in unlicensed bands based on the baseline time and slot boundary for SL signal transmission in licensed bands. In other words, the COT in unlicensed bands is defined based on the baseline time in licensed band, and the starting point of the COT may be configured and defined in synchronization with the slot starting position in the licensed bands. Referring to FIG. 11, the COT may be configured to align with the boundaries of V2X slots in licensed bands.

As shown in FIGS. 11 and 12, the COT may include at least one slot. The at least one slot or COT may be configured to include slots spaced at a predetermined time interval (or periodically). In this case, the periodicity of the COT and the position of each of the at least one slot may be configured based on a sidelink frame number (SFN) of licensed bands. The configuration or setting information on the COT is predetermined by the BS/network/LMF, and the determined COT configuration information may be transmitted to each UE or representative UE in the licensed bands. Alternatively, the determined COT configuration information may be shared between UEs. Alternatively, the configuration of the COT may be predefined and used. The configuration or setting information on the COT may be transmitted along with an SIB, DCI on a PDCCH, a PDSCH, or 1st stage SCI, 2nd stage SCI, and/or data on a PSCCH/PSSCH.

Alternatively, the COT configuration information may include information about the starting point of the first COT (COT starting offset), the number of COT slots (the number of slots constituting the COT), and the COT periodicity within one frame (e.g., V2X related subframe). Alternatively, the COT may vary aperiodically or temporarily based on the COT setting information preconfigured by the BS/network/LMF.

A first method of configuring the COT in unlicensed bands may be a method of transmitting V2X control information related to V2X data to be transmitted in unlicensed bands (e.g., reservation information on COT slots and channel resources (e.g., subchannel(s)) in the COT slots) (see FIG. 11(a)). In other words, the V2X control information may be transmitted over a PSCCH or PSSCH in licensed bands, and the V2X data related to the V2X control information may be transmitted in the COT in the unlicensed bands, which is allocated based on the V2X control information. Alternatively, signaling in the licensed bands (i.e., the V2X control information) related to the V2X data in the unlicensed bands may be transmitted in a slot duration in the licensed bands, which are equal to or different from that of the COT.

Alternatively, when an SL-PRS is transmitted in unlicensed bands, signaling related to SL-PRS transmission in the unlicensed bands (e.g., reservation information on COT slots and channel resources in the COT slots, information on an SL-PRS pattern, etc.) in licensed bands may be transmitted in 1st stage SCI, 2nd stage SCI, and/or data on a PSCCH/PSSCH (constituting V2X data transmission slots or SL positioning data/packet transmission slots) in licensed bands. In this case, the SL-PRS in the unlicensed bands and related signaling in the licensed bands may be transmitted in the same slot duration or different slot durations.

A second method of configuring the COT in unlicensed bands may be a method of configuring the COT and COT slots for supporting SL positioning services in the unlicensed bands when a positioning slot group (P-slot group) is configured to support SL positioning services in licensed bands. In this case, the length or size of the COT may be the same as or different from the length of the P-slot group in the licensed bands. In other words, the second method of configuring the COT in unlicensed bands may be a method of configuring the COT such that the COT is related to slots for positioning configured in licensed bands (i.e., slots allocated for positioning among multiple slots for V2X communication in the licensed bands).

In this case, signaling related to SL-PRS transmission in unlicensed bands may be transmitted in 1st stage SCI, 2nd stage SCI, and/or data on a PSCCH/PSSCH in licensed bands (constituting V2X data transmission slots, SL positioning data/packet transmission slots, or P-slots). The SL-PRS in the unlicensed bands and the signaling in the licensed bands may be transmitted in the same slot duration or different slot durations.

Hereinafter, methods for a plurality of UEs to perform the SL-CAP based on the above-described COT slot configuration in order to configure signals in unlicensed bands based on FDM will be described. The method for performing the SL-CAP may include a first SL-CAP method and a second SL-CAP method.

First, the first SL-CAP method may be an SL-CAP method in which a plurality of UEs perform LBT before transmitting SL signals in unlicensed bands. According to the first SL-CAP method, each of the plurality of UEs may perform the LBT at the same time.

In the first SL-CAP method, the LBT may be performed based on clear channel assessment (CCA) or backoff.

Specifically, referring to FIG. 12(a), each UE may perform CCA-based LBT a predetermined (or preconfigured) time of "T-cca" (us) before the starting point of a reserved COT slot. The preconfigured time "T-cca" may be determined by the BS/network/LMF or predefined.

If each UE determines that the channel is idle by performing the CCA the preconfigured time before the COT slot, each UE may perform a self-deferral operation until the start of the COT slot without transmitting a reservation signal for channel acquisition. In other words, when each UE determines that the channel (i.e. channel for unlicensed bands) is idle after performing the CCA and when there is remaining time until the reserved COT slot starts, each UE performs the self-deferral operation to delay the SL signal transmission for the duration of the remaining time.

Such self-deferral operation may minimize interference issues during the CCA process of each UE, which may occur when the baseline times in licensed bands (or synchronization) of each UE do not align with each other. In other words, if a UE that has determined the channel as idle after performing the CCA transmits a reservation signal to acquire the channel until the start of the COT slot, there may be an issue in that another UE performing the CCA determines that the channel is occupied (busy) due to such reservation signals transmitted by neighboring UEs. As a result, the other UE performing the CCA may give up on the SL signal transmission in the reserved COT slot. To address the aforementioned issue, it is necessary to perform the self-deferral operation without transmitting reservation signals.

Alternatively, each UE may transmit the SL signal in the reserved COT slot if the channel is determined to be idle after performing the CCA. However, if the channel is busy, each UE may give up or drop the transmission of the SL signal in the reserved COT slot.

In FIGS. 12(b) and 12(c), two examples of performing backoff-based LBT are illustrated. The execution of the SL-CAP based on the backoff-based LBT may include two processes: ① backoff-based LBT process and (2) CCA-based LBT process.

- ① Backoff-based LBT process: The backoff-based LBT process is an LBT process performed to obtain a preconfigured COT, which may be performed before a first COT slot in which the COT starts or before any COT slot among a plurality of COT slots included in the COT. In other words, the backoff-based LBT process may be performed before the first COT slot or any COT slot among the plurality of COTs included in the reserved COT in order to obtain the reserved COT. In this case, UEs that have reserved the same COT slot perform backoff-based LBT with the same contention window size (CWS).

- ② CCA-based LBT process: The CCA-based LBT process is an LBT process performed to maintain the COT acquired from the backoff-based LBT process (①) (when the reserved COT is obtained from the backoff-based LBT process). The CCA-based LBT process may be performed before the start of another COT slot located after the slot (i.e., the first COT slot or any COT slot) acquired from the backoff-based LBT process (①).

When the reserved COT slot is the first COT slot among the plurality of COT slots included in the COT, each UE may perform the backoff process ahead of the COT slot starts by "T-bo" (us) (see FIG. 12(b)). When each UE intends to perform the backoff before the first COT slot of the reserved COT, each UE may perform the backoff ahead of the start of the first slot by "T-bo" (us). When each UE determines that the channel is idle after performing the backoff process and when there is remaining time until the reserved COT slot starts, each UE performs the self-deferral operation to delay SL signal transmission for the duration of the remaining time. In this case, the predetermined time of "T-bo" may be determined by the BS/network/LMF or predefined. Alternatively, when the reserved COT slot is the first slot of the COT, each UE performs the backoff process ahead of the start of the COT slot by "T-bo" (us). When each UE determines that the channel is idle after performing the backoff process and when there is remaining time until the start of the reserved COT, each UE performs the self-deferral operation to delay the SL signal transmission for the duration of the remaining time. In this case, the predetermine time of "T-bo" may be determined by the BS/network/LMF or predefined.

Alternatively, when there is another COT slot before the reserved COT slot and when the channel is occupied (busy) during the duration of the other COT slot, each UE may give up the SL signal transmission in the other COT slot. In this case, as shown in FIG. 12(b), each UE may perform the backoff process ahead of the start of the reserved COT slot by "T-bo" (us) (see FIG. 12(c)). When each UE determines that the channel is idle after performing the above-described backoff process and when there is remaining time until the reserved COT slot starts, each UE may perform the self-deferral operation to delay the SL signal transmission for the duration of the remaining time. Alternatively, when each UE confirms that a COT slot before the first COT slot is occupied by another UE by performing the backoff before the first COT slot of the reserved COT, each UE may cancel or drop the SL signal transmission in the first COT slot. In this case, the UE performs the backoff before the second COT slot and then performs the self-deferral operation for the remaining time as described above.

Alternatively, referring to FIGS. 12(b) and 12(c), when the previous COT slot is reserved and used by another UE, each UE uses the SL-CAP method based on the CCA-based LBT, which is described above with reference to FIG. 12(a), to quickly use the reserved COT slot. In other words, when each UE performs the backoff before the first COT slot of the reserved COT and then detects that another UE occupies the COT slot before the first COT slot, each UE may perform the CAP in the first COT slot based on the CCA-based LBT (FIG. 12(a)) rather than the backoff-based LBT (FIG. 12(b) and 12(c)). In this case, the UE may use the second COT slot quickly, compared to the backoff-based LBT.

In addition, referring to FIGS. 12(b) and 12(c), each UE may determine whether the previous COT slot is currently used by another UE that has reserved the previous slot by detecting a signal transmitted by the other UE. The signal may be an RS (e.g., DMRS, PRS, etc.) or a predetermined access signal.

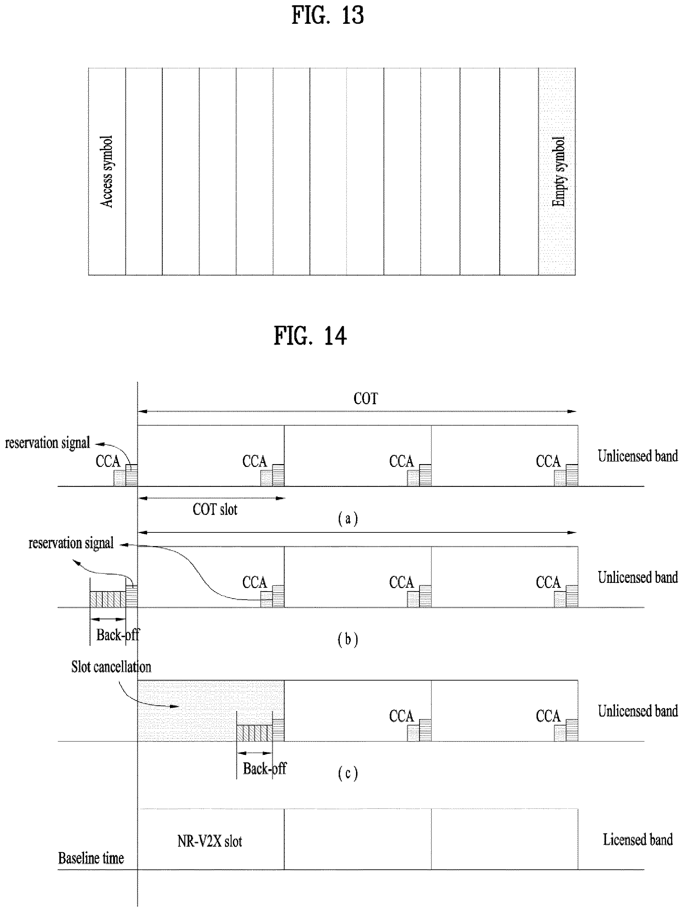

FIG. 13 is a diagram for explaining the structure of a COT slot for an SL-CAP.

Referring to FIG. 13, the COT slot may include at least one empty OFDM symbol. The at least one empty OFDM symbol may be an OFDM symbol for performing CCA on another COT slot next to the COT slot. The number of one or more empty OFDM symbols may be determined based on the duration of the CCA or preconfigured by the BS or LMF.

The COT may include one or more COT slots, and the UE may effectively perform CCA before the start of the reserved COT slot based on the COT slot structure. The last OFDM symbol of the COT slot is an empty OFDM symbol, and the last OFDM symbol may serve as a period for which the CCA is performed to use the next COT slot. In other words, one or more consecutive OFDM symbols including the last OFDM symbol in the COT slot may be set to empty OFDM symbol(s) for performing CCA for the next COT slot. In this case, the empty OFDM symbol(s) may consist of one or more symbols depending on the CCA duration, which may be determined by the BS/network/LMF or predefined.

The second SL-CAP method may be a method in which only a representative UE (or C-UE) among a plurality of UEs scheduled to transmit SL signals in the same COT slot based on FDM performs the above-described LBT. In this case, other UEs may not perform the LBT operation. In addition, the representative UE (or C-UE) may share the obtained or reserved COT slot by transmitting an access signal with the N-UE.

Hereinafter, methods for the representative UE or C-UE to perform the SL-CAP will be described.

The C-UE refers to at least one UE selected from among a plurality of UEs that have reserved SL signal transmission in the same COT slot, and the C-UE may compete with neighboring heterogeneous UEs to obtain the COT slot. The N-UE refers to the remaining reserved UE except for the C-UE, and the N-UE does not participate in competition for obtaining the COT slot. In this case time, the C-UE may be selected by the BS/network/LMF or predefined as follows.

First, a channel resource (e.g., subchannel) for the C-UE may be specified in advance within the COT slot. That is, when a UE reserves a channel resource designated by a channel resource reservation process in licensed bands, the UE is selected as the C-UE and then performs the LBT operation. In other words, a plurality of UEs may select and reserve subchannels in the COT slot in licensed bands, and a UE that reserves a subchannel with a predetermined index may be selected as the C-UE.

Alternatively, priorities related to selection of the C-UE may be configured for each of the plurality of subchannels included in the COT slot. The C-UE may be selected or determined from among the plurality of UEs based on the priorities of the subchannels in the COT slot reserved by the plurality of UEs. Accordingly, it is possible to preemptively prevent the issue of COT slot acquisition failure that may occur when the channel resource designated for the CUE is not reserved.

Alternatively, to address the issue of transmission failure of the access signal that may occur when there is one C-UE, two or more C-UEs may be selected. In this case, if multiple C-UEs perform the backoff-based LBT, the same CWS may be configured between the multiple C-UEs.

After acquiring the COT slot, the C-UE may transmit the access signal to the N-UE to notify that the reserved COT slot is obtained. The access signal may have the following characteristics.

The access signal may be newly designed. When one or more UEs are selected as C-UEs, access signals transmitted from the C-UEs may have different IDs and different sequence patterns. In this case, signaling related to the access signal may be shared/transmitted in advance to all UEs that have reserved the same COT slot through signaling in licensed bands. For example, the ID and/or sequence pattern related to the access signal may be transmitted to a plurality of UEs in licensed bands.

An RS (e.g., DMRS, PRS, SRS, etc.) of the C-UE may be used as the access signal. For example, in the V2X data transmission system, a DMRS may be repeatedly transmitted as the access signal, and in the SL positioning system, an SL-PRS may be repeatedly transmitted as the access signal. In other words, the access signal may be configured by repeating the DMRS or SL-PRS for a PSSCH.

Next, the C-UE may maintain the obtained COT slot by repeatedly transmitting the access signal until N-UEs transmit SL signals or by transmitting a portion of data including the access signal in the V2X data transmission system.

The N-UE does not perform the LBT process for acquiring the obtained or reserved COT slot. However, the N-UE performs a process of receiving and detecting the access signal transmitted by the C-UE in order to share the COT slot obtained by the C-UE. As a result, upon successfully detecting the access signal, the N-UE determines that the C-UE has successfully obtained the COT slot. The N-UE may transmit the SL signal without performing the LBT operation similarly to operations in licensed bands.

Alternatively, when one or more C-UEs are selected and when the baseline times in licensed bands are consistent among the C-UEs, the same COT slot may be acquired by the one or more C-UEs. The N-UE may share/use the obtained COT slot upon receiving the prereserved access signal from at least one C-UE.

Hereinafter, methods for the C-UE to perform the LBT will be described in detail.

FIG. 14 is a diagram for explaining an SL-CAP method for a C-UE to perform LBT.

Similarly to the case of FIG. 12, the C-UE may perform the SL-CAP according to the SL-CAP method based on the CCA-based LBT (see FIG. 14(a)) and/or the SL-CAP method based on the backoff-based LBT (see FIGS. 14(b) and 14(c)).

Referring to FIG. 14(a), the C-UE may perform the SL-CAP based on the CCA-based LBT. Compared to the SL-CAP method based on the CCA-based LBT shown in FIG. 12(a), the UE may transmit a reservation signal after performing the LBT, instead of performing the self-deferral operation. In this case, any signal may be transmitted as the reservation signal as long as the signal satisfies the regulatory guideline related to frequency usage (minimum bandwidth occupation of 80%).

Referring to FIGS. 14(b) and 14(c), the C-UE may perform the SL-CAP based on backoff-based LBT. The backoff-based LBT process and the CCA-based LBT process may be performed in the same way as the SL-CAP method based on the backoff-based LBT shown in FIGS. 12(b) and 12(c). When compared with the SL-CAP method based on the backoff-based LBT of FIGS. 12(b) and 12(c), the C-UE may transmit a reservation signal after performing the LBT, instead of performing the self-deferral operation.

Specifically, according to the above-described SL-CAP method in which all UEs perform the LBT as shown in FIG. 12, each UE performs the self-deferral operation after performing CCA to minimize interference therebetween during the CCA operation. However, if the self-deferral duration is long, signal interference from heterogeneous UEs (e.g., Wi-Fi UEs) may occur. In other words, if the heterogeneous UE determines that the channel is idle during the self-deferral duration and transmits a signal, the signal may interfere with an SL signal transmitted at the same time. On the contrary, according to the SL-CAP method in which only the C-UE performs the LBT, interference from heterogeneous UEs does not occur because a reservation signal is transmitted. That is, the C-UE transmits the reservation signal instead of performing the self-deferral operation, thereby preventing the heterogeneous UE from transmitting a signal upon determining that the channel is idle.

Hereinafter, the structure of a COT slot will be described in consideration of access signal transmission from the C-UE.

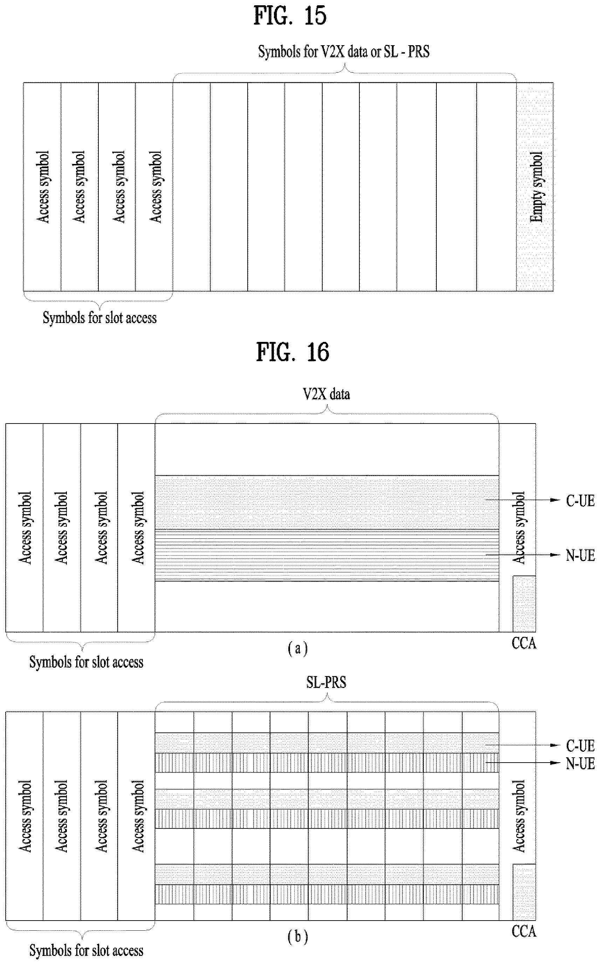

FIGS. 15 and 16 are diagrams for explaining the structure of a COT slot in consideration of access signal transmission from a C-UE.

Referring to FIG. 15, an OFDM symbol located at the front of the COT slot may be a duration for the C-UE to transmit an access signal when the C-UE successfully obtains the reserved COT slot. That is, the COT slot may include at least one OFDM symbol for transmitting the access signal, and the at least one OFDM symbol may be located at the front of the COT slot. In this case, the number of OFDM symbols used for the access signal is determined by the BS/network/LMF or predefined. If the COT slot structure is formed based on the slot structure in licensed bands, the number of OFDM symbols used for the access signal may be set equal to the number of OFDM symbols used for a PSCCH slot in licensed bands. In other words, the number of OFDM symbols may be determined to be equivalent to the number of OFDM symbols preconfigured for the PSCCH in licensed bands, which may be preconfigured by the BS/network/LMF.

An OFDM symbol located at the end of the COT slot may be left empty for the duration of a CCA operation for use of the next COT slot. In addition, one or more empty OFDM symbol(s) may be configured depending on the CCA duration, which may be determined by the BS/network/LMF or predefined.

In this case, V2X data and SL-PRS transmission in unlicensed bands may be performed in the remaining symbols of the COT slot, except for OFDM symbols for transmitting the access signal and OFDM symbols for performing the CCA.

Referring to FIG. 16, a plurality of UEs may transmit SL signals based on FDM. Referring to FIG. 16(a), the C-UE and N-UE may transmit V2X data in the COT slot based on FDM. Referring to FIG. 16(b), the C-UE and N-UE may transmit non-staggered SL-PRSs in the COT slot. In this case, the non-staggered SL-PRS pattern of FIG. 16(b) may be replaced with a staggered SL-PRS pattern.

Alternatively, a plurality of UEs or at least one UE may perform an SL-CAP for transmitting SL signals in the same COT slot based on TDM (i.e., TDM-based SL-CAP). In this case, the plurality of UEs may sequentially perform the LBT before transmitting the SL signals. In particular, the TDM-based SL-CAP may be effectively applied to a system in which each UE uses independent OFDM symbols to transmit the SL-PRS for SL positioning services.

The TDM-based SL-CAP may be performed as follows.

The C-UE may transmit the SL signal with the highest priority in the COT slot and compete with neighboring UEs to acquire the corresponding COT slot. When operating in the TDM transmission mode, the C-UE may obtain the COT slot according to the SL-CAP method based on the CCA-based LBT and the SL-CAP method based on the backoff-based LBT in a similar way to when the C-UE operates in the FDM transmission mode. After acquiring the COT slot, the C-UE may transmit an access signal to the N-UE to notify the acquisition of the reserved COT. In this case, the C-UE may use an SL-PRS as the access signal.

In addition, the operations of the C-UE and N-UE and the SL-CAP method in the TDM transmission mode may be the same as or similar to the operations of the C-UE and N-UE and the SL-CAP method in the FDM transmission mode described above.

Hereinafter, a COT slot structure for supporting the TDM-based SL-CAP will be described in detail.

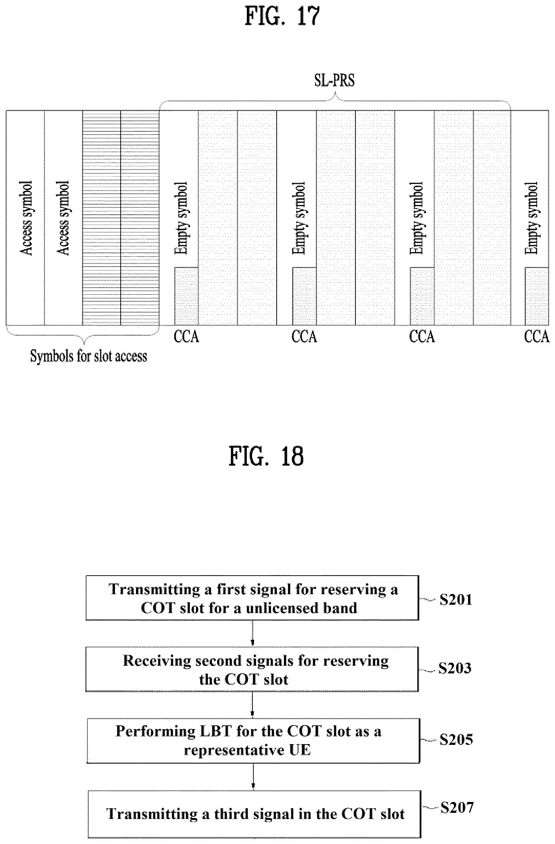

FIG. 17 is a diagram for explaining the structure of a COT slot for supporting a TDM-based SL-CAP.

Referring to FIG. 17, the COT slot may include a symbol duration for transmitting an access signal, a symbol duration for each UE to transmit an SL signal, and a symbol duration for performing CCA.

Specifically, the COT slot may include; a first symbol duration for the C-UE to transmit the access signal to notify successful acquisition of the reserved COT slot (two OFDM symbols located at the front of the COT slot); second symbol durations allocated to each UE (or each N-UE); and third symbol durations, each of which consists of empty symbols for performing CCA and is located between the second symbol durations.

The C-UE may transmit the access signal to notify other UEs of the successful acquisition of the COT slot in the first symbol duration. In this case, the access signal may be an SL-PRS.

Each UE (or the C-UE and each N-UE) may perform the CCA in the third symbol duration, which is located before the second symbol duration allocated to each UE. The third symbol duration for each UE to perform the CCA and/or the second symbol duration for each UE may be allocated while the COT slot is reserved in licensed bands. In other words, the order of performing the CCA (i.e., the positions of the third symbol durations where the CCA will be performed) among the UEs that have reserved the same COT slot and/or the order of transmitting the SL-PRS (i.e., the positions of the second symbol durations) among the UEs may be allocated during the COT slot reservation process in the licensed bands.

In this case, multiple UEs (or the C-UE and N-UEs) may transmit the SL-PRS based on TDM according to the COT slot structure shown in FIG. 17. To prevent degradation in reception performance that may occur when the baseline times in licensed bands do not align with each other, each UE may repeat the SL-PRS transmission twice in the COT slot.

Hereinabove, the new SL-CAP methods for improving the data transmission rate between UEs in unlicensed bands and the frequency use efficiency in the LTE/NR V2X system have been described. The COT determination method and the channel resource reservation method in the COT slot described above may be efficiently performed based on the channel resource reservation method in licensed bands, which has been defined in the prior art. In addition, the SL-CAP methods for multiple UEs to transmit SL signals in the same COT slot based on FDM/TDM described above may increase the frequency use efficiency in unlicensed bands. Further, the SL-CAP methods for the C-UE to share the obtained COT slot with the N-UE based on access signal transmission after performing the LBT may effectively improve the probability of obtaining reserved channel resources in unlicensed bands based on competition in the LTE/NR V2X systems.

FIG. 18 is a diagram for explaining a method in which a UE obtains a COT slot by performing LBT in unlicensed bands.

The UE may transmit an SL signal using any one of a plurality of subchannels for the unlicensed bands. In addition, the UE may transmit the SL signal based on FDM with other UEs.

Referring to FIG. 18, the UE may transmit a first signal in licensed bands to reserve the COT slot and subchannel for the unlicensed bands (S201). In other words, the UE may transmit, to neighboring UEs, the first signal to reserve the COT slot and subchannel for transmitting the SL signal in the unlicensed bands. COT slots and a plurality of subchannels related to the COT slots may be predefined or preconfigured, and the COT slots may be configured based on the reference timing in the licensed bands. The UE may select the COT slot and subchannel to be used among the COT slots and the plurality of subchannels and then transmit the first signal including information on the selected COT slot and subchannel.

Alternatively, the UE may select the subchannel in the unlicensed bands based on a PSCCH or the index of a subchannel in the licensed bands allocated for the PSSCH. For example, the number and bandwidths of subchannels in the unlicensed bands may be preconfigured or predefined to be dependent on those of subchannels in the licensed bands. When the UE transmits an SL signal using a subchannel having an index of 3 in the licensed bands, the UE may select or reserve a subchannel having an index of 3 in the unlicensed bands, dependent on the index of the subchannel in the licensed bands.

Hereinafter, the COT slot is defined as a first slot, and the subchannel reserved or used by the UE in the first slot is defined as a first subchannel. The first slot may refer to a time resource in the unlicensed bands similar to the COT slot, and the first subchannel may refer to a frequency resource frequency division multiplexed (FDMed) in the first slot.

Alternatively, the first signal may refer to an SL control signal (or PSCCH) including scheduling information on a data channel (or PSSCH) to be transmitted in the unlicensed bands. That is, the UE may transmit, as the first signal, the PSCCH scheduling the SL data signal (or PSSCH) to be transmitted in the first slot and first subchannel in the unlicensed bands. In other words, the UE may transmit the PSCCH as the first signal to reserve the first slot and first subchannel in the unlicensed bands for the transmission of the PSSCH.

Alternatively, the first signal may be positioning signaling for scheduling a PRS to be transmitted in the unlicensed bands. In other words, the positioning signaling may include information for reserving the first slot and first subchannel in the unlicensed bands to be used by the UE for the PRS transmission.

Next, the UE may receive a second signal for reserving the same slot as the first slot from a plurality of UEs or at least one UE (S203). The UE may recognize that there are neighboring UEs who desire to use the first slot, based on the second signal. In addition, the UE may determine whether it is necessary to perform LBT for obtaining the first slot, based on the second signal. In other words, there may be one or multiple UEs who desires to reserve the first slot. Hereinafter, for convenience of description, it is assumed that a plurality of UEs transmit the second signal for reserving the first slot.

Similarly to the first signal, the second signal may be a SL control signal (or PSCCH) including scheduling information on a data channel (or PSSCH) to be transmitted in the unlicensed bands. That is, each of the plurality of UEs may transmit, as the second signal, the PSCCH scheduling the SL data signal (or PSSCH) to be transmitted in the first slot and a subchannel in the unlicensed bands. In other words, each of the plurality of UEs may transmit the PSCCH as the second signal to reserve the first slot and subchannel in the unlicensed bands for the transmission of the PSSCH.

Alternatively, the second signal may be positioning signaling for scheduling a PRS to be transmitted in the unlicensed bands. In other words, the positioning signaling may include information for reserving the first slot and subchannel in the unlicensed bands to be used by each of the plurality of UEs for the PRS transmission.

Specifically, the second signal may include information on the subchannel that each of the plurality of UEs intend to use in the first slot. The UE obtains the index of the subchannel for each of the plurality of UEs, based on the second signal. The UE may determine whether to perform the LBT for acquiring the first slot on behalf of the plurality of UEs, based on the obtained subchannel indices and the index of the first subchannel of the UE. In this case, the representative UE that performs the LBT may be determined based on priorities preconfigured for the indices of the subchannels. The preconfigured priority may be set higher as the index is lower, or the preconfigured priority may be set higher as the index is higher. Alternatively, the index of a subchannel related to the representative UE to perform the LBT may be directly configured.

When the index of the first subchannel has a higher priority than the index of the subchannel for each of the plurality of UEs (that is, when the index of the first subchannel has the highest priority), the UE may perform the LBT for acquiring the first slot on behalf of the plurality of UEs based on the preconfigured priority (S205). As described above, the LBT for the first slot may be a procedure for determining the validity of the unlicensed bands, that is, whether other devices occupy the unlicensed bands. When the UE performs the LBT for the first slot as the representative, the plurality of UEs do not perform the LBT for the first slot. In summary, when the plurality of UEs receive the first signal and recognize that the index of the first subchannel included in the first signal has a higher priority, the plurality of UEs do not perform the LBT for the first slot.

When performing the LBT related to the first slot as the representative UE, the UE may determine whether the unlicensed bands are idle or occupied by other devices as described above. When it is determined that the unlicensed bands are idle, the UE may acquire the first slot and transmit an access signal to notify the plurality of UEs of the acquisition of the first slot. The access signal may be transmitted in the first slot of the unlicensed bands. Specifically, the first OFDM symbol and/or a plurality of consecutive OFDM symbols including the first OFDM symbol of the fist slot may be preset to a first OFDM symbol for transmitting the access signal, and the access signal may be transmitted in the first OFDM symbol. In this case, the plurality of UEs may monitor whether the access signal transmitted in the first slot is received.

As described above, the access signal may be a signal in which a sequence related to the UE is repeated, a signal in which a DMRS related to the UE is repeated, or a signal in which a PRS is repeated. Alternatively, the access signal may be used as a signal for automatic gain control (AGC).

If the access signal is the signal in which the PRS is repeated, the PRS may be transmitted with a predetermined PRS pattern. In other words, a specific PRS pattern or specific PRS pattern ID to be used as the access signal may be predefined, and the plurality of UEs may recognize that the access signal is received upon receiving the PRS with the specific PRS pattern or specific PRS pattern ID.

Alternatively, the UE may transmit a fourth signal, which is a reservation signal, immediately before the first slot to maintain the obtained first slot. The UE may prevent other devices from transmitting signals in the first slot by transmitting the reservation signal.

Next, when the UE obtains the first slot by performing the LBT, the UE may transmit a third signal, which is an SL signal, in the first slot and first subchannel (S207). As described above, the third signal may be transmitted in the remaining symbols except for the first OFDM symbol. The third signal may be an SL data signal or PRS as described above. In this case, each of the plurality of UEs may transmit its own signal on a subchannel in the first slot, where the subchannel is reserved based on the second signal. In other words, the UE and the plurality of UEs may transmit signals in the first slot based on FDM.

Alternatively, the third signal may not be transmitted in the last OFDM symbol of the first slot. The last OFDM symbol of the first slot may be empty to perform the LBT or CCA for a second slot after the first slot. In other words, regions for the first OFDM symbol and the last OFDM symbol may be preconfigured in the first slot. The third signal may be transmitted in the remaining OFDM symbols except for the first OFDM symbol and last OFDM symbol of the first slot.

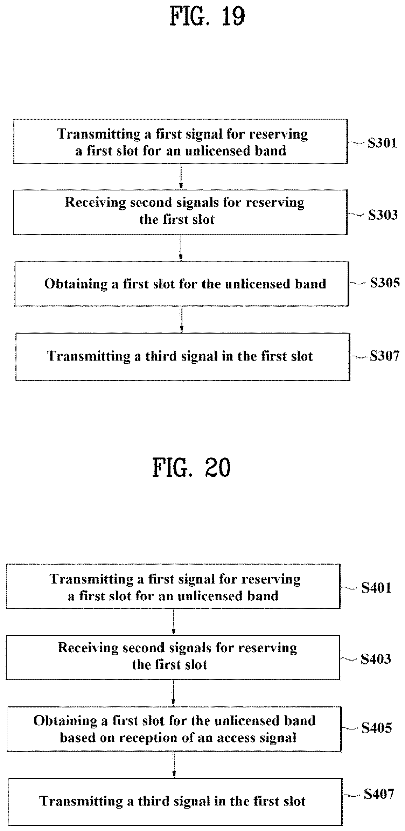

FIG. 19 is a flowchart illustrating a method for a first UE to acquire a first slot for unlicensed bands.

Referring to FIG. 19, the first UE may transmit a first signal in licensed bands to reserve the first slot for the unlicensed bands (S301). The first slot may be FDMed with a plurality of subchannels. The first UE may transmit the first signal for reserving a first subchannel, which is one of the subchannels of the first slot.

Next, the first UE may receive a second signal for reserving another non-overlapping subchannel in the first slot from a plurality of UEs, which are neighboring UEs (S303). For example, the indices of the subchannels for the first slot may be determined in correlation or dependence with the indices of subchannels used or occupied by the first UE and/or the plurality of UEs in the licensed bands. Considering that the plurality of UEs and the first UE use non-overlapping subchannels in the licensed bands, non-overlapping subchannels in the unlicensed bands may be reserved by the first signal and the second signal.

Next, if preconfigured conditions are satisfied, the first UE may perform operations for acquiring the first slot as a representative UE (S305). The first UE may perform the operations for acquiring the first slot according to the methods shown in FIGS. 11 to 18.

Specifically, the first UE may determine whether the first UE is the representative UE supposed to obtain the first slot based on the index of the first subchannel. When the index of the first subchannel has the highest priority or when the index of the first subchannel has a higher priority than the indices of subchannels reserved by the plurality of UEs, the first UE may be determined as the representative UE supposed to acquire the first slot based on predetermined priorities. Here, the predetermined priorities may be preconfigured in ascending or descending order of indices, or the predetermined priorities may be preconfigured based on a specific index.

If preconfigured conditions are satisfied, the first UE may perform LBT for obtaining the first slot. The first UE may detect signals from other UEs or devices in the unlicensed bands before the first slot. The first UE may determine that the channel associated with the first slot is idle if no signals from the other devices are detected before the first slot. As described above, the first UE may perform channel sensing based on CCA and/or backoff as an operations related to the LBT.

When it is confirmed that the unlicensed bands are idle, the first UE may transmit a fourth signal, which is a reservation signal for acquiring the first slot. The reservation signal may be transmitted before the first slot. The reservation signal may be a signal for informing the other devices or other UEs of the occupancy state of the first slot.

After transmitting the fourth signal, the first UE may transmit an access signal in a specific OFDM symbol of the first slot to inform the plurality of UEs of the acquisition of the first slot. The access signal may be a preconfigured type of signal as described above in FIGS. 11 to 18. For example, the access signal may be a signal in which a DMRS related to the first UE is repeated or a signal in which a PRS having a specific PRS ID or specific PRS pattern is repeated. When the plurality of UEs repeatedly detects the DMRS related to the first UE, the plurality of UEs may recognize that the first slot has been acquired and then transmit SL signals on subchannels reserved for the first slot.

The access signal may be transmitted in the first OFDM symbol among a plurality of OFDM symbols included in the first slot. Alternatively, the access signal may be transmitted in at least one consecutive OFDM symbol including the first OFDM symbol among the plurality of OFDM symbols included in the first slot. The access signal may be transmitted on each of the subchannels included in the first slot or on the first subchannel.

Next, the first UE may transmit, as a third signal, an SL signal on the first subchannel of the acquired first slot (S307). The SL signal transmitted on the first subchannel may be a PSCCH, which is an SL control signal, and/or a PSSCH, which is an SL data signal.

Alternatively, the first UE may transmit the PSCCH in the licensed bands and transmit the PSSCH scheduled by the PSCCH on the first subchannel of the first slot. In other words, the first signal may be the PSCCH, and the third signal may be the PSSCH scheduled by the PSCCH.

Alternatively, the first UE may perform positioning signaling for positioning in the licensed bands and transmit a PRS scheduled by the positioning signaling on the first subchannel of the first slot. In other words, the first signal may correspond to the positioning signaling, and the third signal may be the PRS related to the positioning signaling.

The first UE and/or the plurality of UEs may leave the last OFDM symbol among the OFDM symbols included in the first slot empty, instead of using the last OFDM symbol for the transmission of the third signal. In other words, the last symbol among the OFDM symbols included in the first slot may be an empty symbol, which is not used. Alternatively, the use of at least one consecutive OFDM symbol including the last OFDM symbol among the OFDM symbols included in the first slot may be restricted. Specifically, the last symbol may be used to perform CCA for occupying a second slot next to the first slot. That is, the last symbol may be restricted such that the last symbol is not used by UEs occupying the first slot for signal transmission.

FIG. 20 is a flowchart for explaining a method for a second UE to acquire a first slot for unlicensed bands.

Referring to FIG. 20, the second UE may transmit the first signal in licensed bands to reserve the first slot for the unlicensed bands (S401). The first slot may be FDMed with a plurality of subchannels, and the second UE may transmit the first signal for reserving a second subchannel, which is one of the subchannels in the first slot.

Next, the second UE may receive a second signal for reserving another non-overlapping subchannel in the first slot from a plurality of UEs, which are neighboring UEs (S403). For example, the indices of the subchannels for the first slot may be determined in correlation or dependence with the indices of subchannels used or occupied by the second UE and/or the plurality of UEs in the licensed bands. Considering that the plurality of UEs and the second UE use non-overlapping subchannels in the licensed bands, non-overlapping subchannels in the unlicensed bands may be reserved by the first signal and the second signal.

Next, if the second UE is not determined as a representative UE, the second UE may acquire the first slot based on reception of an access signal (S405). Specifically, the second UE may determine whether the second UE is the representative UE supposed to obtain the first slot based on the index of the second subchannel. If the index of one of subchannels reserved by the plurality of UEs has a higher priority than the index of the second subchannel, the second UE may not be determined as the representative UE supposed to perform LBT for the first slot based on predetermined priorities.

In this case, a UE (e.g., the representative UE) having reserved a subchannel of which the index has the highest priority among the plurality of subchannels may perform the LBT related to the first slot. For example, the representative UE may perform the LBT operation described above in FIGS. 11 to 18 on behalf of the second UE. In other words, the second UE may not perform the LBT operation related to the first slot.

Upon receiving the access signal transmitted by the representative UE in a specific OFDM symbol of the first slot, the second UE may obtain the first slot. The access signal may be a preconfigured type of signal as described in FIGS. 11 to 18. For example, the access signal may be a signal in which a DMRS related to the first UE is repeated or a signal in which a PRS having a specific PRS ID or specific PRS pattern is repeated. In other words, when the second UE detects the DMRS related to the representative UE, the second UE may recognize that the first slot has been acquired.

The access signal may be received in the first OFDM symbol among a plurality of OFDM symbols included in the first slot. Alternatively, the access signal may be received in at least one consecutive OFDM symbol including the first OFDM symbol among the plurality of OFDM symbols included in the first slot. The access signal may be received on each of the subchannels included in the first slot or on the subchannel reserved by the representative UE.

In other words, the second UE may monitor whether the access signal is received on the subchannel reserved by the representative UE in the first slot. Upon receiving the access signal the second UE may obtain the first slot or recognize the acquisition of the first slot.

Next, the second UE may transmit as a third signal an SL signal on the second subchannel of the acquired first slot (S407). The SL signal transmitted on the second subchannel may be a PSCCH, which is an SL control signal, and/or a PSSCH, which is an SL data signal.

Alternatively, the second UE may transmit the PSCCH in the licensed bands and transmit the PSSCH scheduled by the PSCCH on the second subchannel in the first slot. In other words, the first signal may be the PSCCH, and the third signal may be the PSSCH scheduled by the PSCCH.

Alternatively, the second UE may perform positioning signaling for positioning in the licensed bands and transmit a PRS scheduled by the positioning signaling on the second subchannel of the first slot. In other words, the first signal may correspond to the positioning signaling, and the fourth signal may be the PRS related to the positioning signaling.

The second UE and/or the plurality of UEs may leave the last OFDM symbol among the OFDM symbols included in the first slot empty, instead of using the last OFDM symbol for the transmission of the third signal. In other words, the last symbol among the OFDM symbols included in the first slot may be an empty symbol, which is not used. Alternatively, the use of at least one consecutive OFDM symbol including the last OFDM symbol among the OFDM symbols included in the first slot may be restricted. Specifically, the last symbol may be used to perform CCA for occupying a second slot next to the first slot. That is, the last symbol may be restricted such that the last symbol is not used by UEs occupying the first slot for signal transmission.

**Communication system example to which the present disclosure is applied**

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

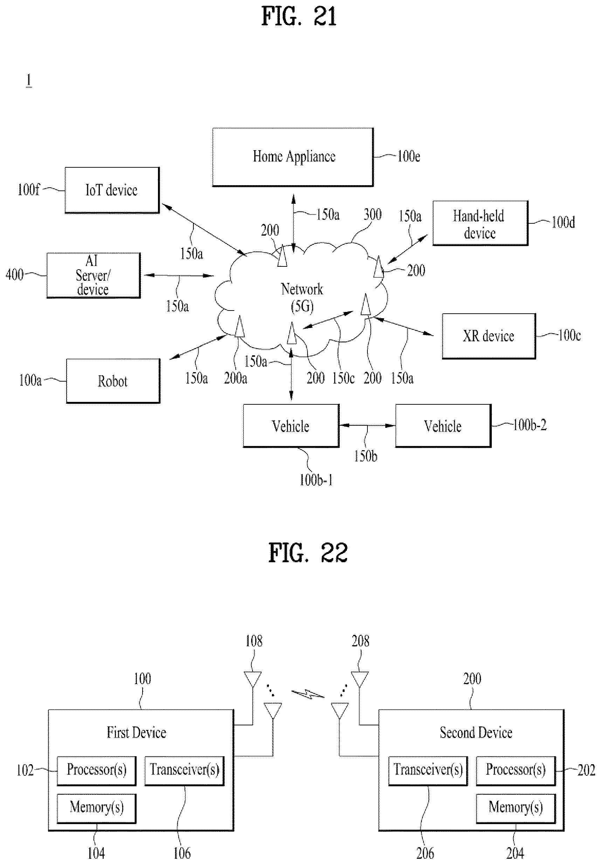

FIG. 21 illustrates a communication system applied to the present disclosure.

Referring to FIG. 21, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

**Examples of wireless devices to which the present disclosure is applied**

FIG. 22 illustrates a wireless device applicable to the present disclosure.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

Specifically, a first UE may include the processor(s) 102 connected to the RF transceiver (or transceiver(s) 106) and the memory(s) 104. The memory(s) 104 may include at least one program for performing the methods for acquiring a first slot in unlicensed bands described with reference to FIGS. 11 to 20.

The processor(s) 102 may control the RF transceiver to: transmit a first signal in licensed bands to reserve the first slot and a first subchannel for the unlicensed bands; receive, from a plurality of UEs, second signals for reserving non-overlapping subchannels in the first slot; and transmit a third signal on the first subchannel and in the first slot based on acquisition of the first slot. Based on that an index of the first subchannel has a higher priority than indices of subchannels reserved by the plurality of UEs, the processor may be configured to perform LBT in the unlicensed bands to acquire the first slot on behalf of the plurality of UEs.

Alternatively, a chipset including the processor(s) 102 and the memory(s) 104 may be configured. The chipset may include: at least one processor; and at least one memory operably connected to the at least one processor and configured to, when executed, cause the at least one processor to perform operations. The operations may include: transmitting a first signal in licensed bands to reserve a first slot and a first subchannel for unlicensed bands; receiving, from a plurality of UEs, second signals for reserving non-overlapping subchannels in the first slot; transmitting a third signal on the first subchannel and in the first slot based on acquisition of the first slot; and based on an index of the first subchannel having a higher priority than subchannels reserved by the plurality of UEs, performing LBT in the unlicensed bands to acquire the first slot on behalf of the plurality of UEs. In addition, the operations may include operations of acquiring the first slot and transmitting an SL signal in the first slot according to the embodiments described in FIGS. 11 and 20 based on the program included in the memory(s) 104.

Alternatively, there is provided a computer-readable storage medium including at least one computer program configured to cause at least one processor to perform operations. The operations may include: transmitting a first signal in licensed bands to reserve a first slot and a first subchannel for unlicensed bands; receiving, from a plurality of UEs, second signals for reserving non-overlapping subchannels in the first slot; transmitting a third signal on the first subchannel and in the first slot based on acquisition of the first slot; and based on an index of the first subchannel having a higher priority than subchannels reserved by the plurality of UEs, performing LBT in the unlicensed bands to acquire the first slot on behalf of the plurality of UEs. In addition, the operations may include operations of acquiring the first slot and transmitting an SL signal in the first slot according to the embodiments described in FIGS. 11 and 20 based on the program included in the memory(s) 104.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

A second UE may include the transceiver(s) 206 or RF transceiver, the memory(s) 204, and/or the processor(s) 202.

The processor(s) 202 may be configured to control the RF transceiver to: transmit a first signal in licensed bands to reserve a first slot and a second subchannel for unlicensed bands; receive, from a plurality of UEs, second signals for reserving non-overlapping subchannels in the first slot; and transmit a third signal on the second subchannel and in the first slot based on acquisition of the first slot. When an access signal is received from any one of the plurality of UEs in at least one predetermined OFDM symbol in the first slot, the first slot may be acquired based on that an index of the second subchannel has a lower priority than an index of at least one of the subchannels. In addition, the operations may include operations of acquiring the first slot and/or transmitting an SL signal in the first slot according to the embodiments described in FIGS. 11 and 20 based on the program included in the memory(s) 204.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Examples of wireless devices to which the present disclosure is applied**

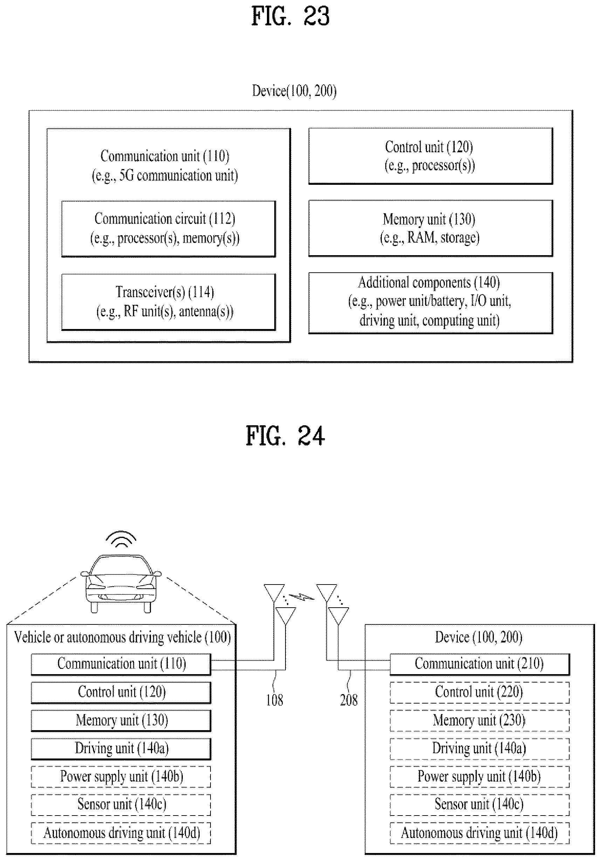

FIG. 23 illustrates another example of a wireless device applied to the present disclosure. The wireless device may be implemented in various forms according to a use-case/service (refer to FIG. 21)

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Examples of vehicles or autonomous vehicles to which the present disclosure is applied**

FIG. 24 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 24, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), and Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure. For example, those skilled in the art may use the components described in the foregoing embodiments in combination. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The above-described embodiments of the present disclosure are applicable to various mobile communication systems.

**Claims**

1. A method of acquiring, by a first user equipment (UE), a first slot including a plurality of subchannels in unlicensed bands in a wireless communication system supporting sidelink, the method comprising:

   transmitting a first signal in licensed bands, wherein the first signal is to reserve the first slot and a first subchannel for the unlicensed bands;
   receiving, from a plurality of UEs, second signals for reserving non-overlapping subchannels in the first slot; and
   transmitting a third signal in the first subchannel and the first slot, based on acquisition of the first slot,
   wherein based on an index of the first subchannel has a higher priority than indices of subchannels reserved by the plurality of UEs, the first UE performs Listen -Before-Talk (LBT) in the unlicensed bands to acquire the first slot on behalf of the plurality of UEs.

2. The method of claim 1, wherein based on determination that the unlicensed bands are idle as a result of performing the LBT, the first UE transmits an access signal in at least one predetermined orthogonal frequency division multiplexing (OFDM) symbol in the first slot, and
   wherein the access signal is to inform the plurality of UEs of the acquisition of the first slot.

3. The method of claim 2, wherein the access signal is a demodulation reference signal (DMRS) related to the first UE, and
   wherein the DMRS is repeated a plurality of times.

4. The method of claim 2, wherein the transmission of the access signal is related to repeated transmission of a positioning reference signal (PRS) with a predetermined PRS pattern.

5. The method of claim 2, wherein the at least one predetermined OFDM symbol comprises a first OFDM symbol of the first slot.

6. The method of claim 1, wherein a last orthogonal frequency division multiplexing (OFDM) symbol of the first slot is preconfigured as an empty ODFM symbol for performing clear channel assessment (CCA).

7. The method of claim 1, wherein based on determination that the unlicensed bands are idle as a result of performing the LBT, the first UE transmits a fourth signal before the first slot in the unlicensed bands, and
   wherein the fourth signal is to occupy the unlicensed bands.

8. The method of claim 1, wherein the first signal is a physical sidelink control channel (PSCCH), and
   wherein the third signal is a physical sidelink shared channel (PSSCH).

9. A method of acquiring, by a second user equipment (UE), a first slot including a plurality of subchannels in unlicensed bands in a wireless communication system supporting sidelink, the method comprising:

   transmitting a first signal in licensed bands, wherein the first signal is to reserve the first slot and a second subchannel for the unlicensed bands;
receiving, from a plurality of UEs, second signals for reserving non-overlapping subchannels in the first slot; and
transmitting a third signal in the second subchannel and the first slot based on acquisition of the first slot,
wherein based on that an index of the second subchannel has a lower priority than an index of at least one of
the subchannels and that an access signal is received from any one of the plurality of UEs in at least one
predetermined orthogonal frequency division multiplexing (OFDM) symbol in the first slot, the first slot is acquired.

10. The method of claim 9, wherein the access signal comprises a demodulation reference signal (DMRS) repeated a
plurality of times or a positioning reference signal (PRS) with a predetermined PRS pattern.

11. A first user equipment (UE) configured to acquire a first slot including a plurality of subchannels in unlicensed bands
in a wireless communication system supporting sidelink communication, the first UE comprising:

a radio frequency (RF) transceiver; and
a processor connected to the RF transceiver,
wherein the processor is configured to control the RF transceiver to:

transmit a first signal in licensed bands, wherein the first signal is to reserve the first slot and a first subchannel
for the unlicensed bands;
receive, from a plurality of UEs, second signals for reserving non-overlapping subchannels in the first slot;
and
transmit a third signal in the first subchannel and the first slot based on acquisition of the first slot, and
wherein based on that an index of the first subchannel has a higher priority than indices of subchannels
reserved by the plurality of UEs, the processor is configured to perform Listen -Before-Talk (LBT) in the
unlicensed bands to acquire the first slot on behalf of the plurality of UEs.

12. A second user equipment (UE) configured to acquire a first slot including a plurality of subchannels in unlicensed
bands in a wireless communication system supporting sidelink, the second UE comprising:

a radio frequency (RF) transceiver; and
a processor connected to the RF transceiver,
wherein the processor is configured to control the RF transceiver to:

transmit a first signal in licensed bands, wherein the first signal is to reserve the first slot and a second
subchannel for the unlicensed bands;
receive, from a plurality of UEs, second signals for reserving non-overlapping subchannels in the first slot;
and
transmit a third signal on the second subchannel and in the first slot based on acquisition of the first slot, and
wherein based on that an index of the second subchannel has a lower priority than an index of at least one
of the subchannels and that an access signal is received from any one of the plurality of UEs in at least
one predetermined orthogonal frequency division multiplexing (OFDM) symbol in the first slot, the first slot
is acquired.

13. A chipset configured to acquire a first slot including a plurality of subchannels in unlicensed bands in a wireless
communication system supporting sidelink, the chipset comprising:

at least one processor; and
at least one memory operably connected to the at least one processor and configured to, when executed, cause
the at least one processor to perform operations comprising:

transmitting a first signal in licensed bands, wherein the first signal is to reserve the first slot and a first
subchannel for the unlicensed bands;
receiving, from a plurality of UEs, second signals for reserving non-overlapping subchannels in the first slot;
transmitting a third signal in the first subchannel and the first slot based on acquisition of the first slot; and
wherein based on an index of the first subchannel having a higher priority than subchannels reserved by
the plurality of UEs, performing Listen -Before-Talk (LBT) in the unlicensed bands to acquire the first slot
on behalf of the plurality of UEs.

**14.** The chipset of claim 13, wherein the processor is configured to control a driving mode of a device connected to the chipset based on the first signal.

**15.** A computer-readable storage medium comprising at least one computer program configured to cause at least one processor to acquire a first slot including a plurality of subchannels in unlicensed bands in a wireless communication system supporting sidelink,

wherein the at least one computer program is configured to cause the at least one processor to perform operations for acquiring the first slot,
wherein the at least one computer program is stored on the computer-readable storage medium,
wherein the operations comprise:

transmitting a first signal in licensed bands, wherein the first signal is to reserve the first slot and a first subchannel for the unlicensed bands;
receiving, from a plurality of UEs, second signals for reserving non-overlapping subchannels in the first slot; and
transmitting a third signal in the first subchannel and the first slot based on acquisition of the first slot, and wherein based on an index of the first subchannel having a higher priority than subchannels reserved by the plurality of UEs, the processor is configured to perform Listen - Before-Talk (LBT) in the unlicensed bands to acquire the first slot on behalf of the plurality of UEs.

FIG. 1

# FIG. 2

# FIG. 3

# FIG. 4

··· | One Frame (10ms) | ···

··· | Half-Frame (5ms) | Half-Frame (5ms) | ···

··· | Subframe 0 (1ms) | ··· | Subframe 4 (1ms) | Subframe 5 (1ms) | ··· | Subframe 9 (1ms) | ···

Subframe (1ms)

**15KHz** | Slot 0 (14symbols)

1ms

**30KHz** | Slot 0 (14symbols) | Slot 1

500us

**60KHz** | Slot 0 (14symbols) | Slot 1 | Slot 2 | Slot 3

250us

**120KHz** | Slot 0 (14symbols) | Slot 1 | Slot 2 | Slot 3 | Slot 4 | Slot 5 | Slot 6 | Slot 7

125us

FIG. 5

# FIG. 6

(a)

(b)

# FIG. 7

BS (e.g. eNB or gNB)

UE1                    UE2

# FIG. 8

Frequency

| Unit #($N_F$-1) | Unit #($2N_F$-1) | | Unit #($N_F*N_T$-1) | Unit #($N_F$-1) |
|---|---|---|---|---|
| ⋮ | ⋮ | | ⋮ | ⋮ |
| Unit #1 | Unit #($N_F$+1) | ⋯ | Unit #($N_F*N_T$-$N_F$+1) | Unit #1 |
| Unit #0 | Unit #$N_F$ | | Unit #($N_F*N_T$-$N_F$) | Unit #0 |

Time

D2D signal transmission
from a UE allocated with unit #0

D2D signal transmission
from a UE allocated with unit #0

# FIG. 9

(a)

(b)

# FIG. 10

BS A
(anchor cell)

BS B

BS C

# FIG. 11

COT periodicity

Unlicensed band

COT

NR-V2X slots | NR-V2X slots

Licensed band

Slot boundary

( a )

COT periodicity

Unlicensed band

COT

NR-V2X slots | NR-V2X slots

Licensed band

P-slot group

P-slot

( b )

EP 4 290 970 A1

# FIG. 12

COT

Self-deferral

CCA · · · CCA · · · CCA · · · CCA · · · Unlicensed band

COT slot

( a )

Self-deferral

CCA · · · CCA · · · CCA · · · Unlicensed band

Back-off

( b )

Slot cancellation

CCA · · · CCA · · · Unlicensed band

Back-off ( c )

NR-V2X slot · · · Licensed band

Baseline time

# FIG. 13

# FIG. 14

# FIG. 15

Symbols for V2X data or SL - PRS

Access symbol | Access symbol | Access symbol | Access symbol | | | | | | | | | | | Empty symbol

Symbols for slot access

# FIG. 16

V2X data

Access symbol | Access symbol | Access symbol | Access symbol | Access symbol

→ C-UE
→ N-UE

CCA

Symbols for slot access

(a)

SL-PRS

Access symbol | Access symbol | Access symbol | Access symbol | Access symbol

→ C-UE
→ N-UE

CCA

Symbols for slot access

(b)

44

# FIG. 17

SL-PRS

Access symbol | Access symbol | | Empty symbol | | CCA | Empty symbol | | CCA | Empty symbol | | CCA | Empty symbol | CCA

Symbols for slot access

CCA   CCA   CCA   CCA

# FIG. 18

Transmitting a first signal for reserving a COT slot for a unlicensed band — S201

Receiving second signals for reserving the COT slot — S203

Performing LBT for the COT slot as a representative UE — S205

Transmitting a third signal in the COT slot — S207

# FIG. 19

| | |
|---|---|
| Transmitting a first signal for reserving a first slot for an unlicensed band | ~ S301 |

↓

| | |
|---|---|
| Receiving second signals for reserving the first slot | ~ S303 |

↓

| | |
|---|---|
| Obtaining a first slot for the unlicensed band | ~ S305 |

↓

| | |
|---|---|
| Transmitting a third signal in the first slot | ~ S307 |

# FIG. 20

| | |
|---|---|
| Transmitting a first signal for reserving a first slot for an unlicensed band | ~ S401 |

↓

| | |
|---|---|
| Receiving second signals for reserving the first slot | ~ S403 |

↓

| | |
|---|---|
| Obtaining a first slot for the unlicensed band based on reception of an access signal | ~ S405 |

↓

| | |
|---|---|
| Transmitting a third signal in the first slot | ~ S407 |

# FIG. 21

# FIG. 22

# FIG. 23

Device(100, 200)

| Communication unit (110)<br>(e.g., 5G communication unit) | Control unit (120)<br>(e.g., processor(s)) |
|---|---|
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 24

Vehicle or autonomous driving vehicle (100)
- Communication unit (110)
- Control unit (120)
- Memory unit (130)
- Driving unit (140a)
- Power supply unit (140b)
- Sensor unit (140c)
- Autonomous driving unit (140d)

108    208

Device (100, 200)
- Communication unit (210)
- Control unit (220)
- Memory unit (230)
- Driving unit (140a)
- Power supply unit (140b)
- Sensor unit (140c)
- Autonomous driving unit (140d)

## INTERNATIONAL SEARCH REPORT

| International application No. |
|---|
| **PCT/KR2021/010030** |

### A. CLASSIFICATION OF SUBJECT MATTER

**H04W 74/08**(2009.01)i; **H04W 72/04**(2009.01)i; **H04W 92/18**(2009.01)i; **H04W 4/40**(2018.01)i

According to International Patent Classification (IPC) or to both national classification and IPC

### B. FIELDS SEARCHED

Minimum documentation searched (classification system followed by classification symbols)

H04W 74/08(2009.01); H04W 28/04(2009.01); H04W 4/40(2018.01); H04W 48/08(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 사이드링크(sidelink), PSSCH, PSCCH, LBT, 서브 채널(sub-channel), 우선순위 (priority), 슬롯(slot)

### C. DOCUMENTS CONSIDERED TO BE RELEVANT

| Category* | Citation of document, with indication, where appropriate, of the relevant passages | Relevant to claim No. |
|---|---|---|
| A | KR 10-2020-0068744 A (LG ELECTRONICS INC.) 15 June 2020 (2020-06-15)<br>See paragraphs [0071]-[0072]. | 1-15 |
| A | ERICSSON. Miscellaneous non-controversial corrections Set VIII. R2-2011148, 3GPP TSG-RAN WG2 Meeting #112e, Electronic Meeting. 20 November 2020.<br>See section 6.2.1. | 1-15 |
| A | KR 10-2020-0087719 A (LG ELECTRONICS INC.) 21 July 2020 (2020-07-21)<br>See paragraphs [0193]-[0206]; and figures 15-17. | 1-15 |
| A | KR 10-2021-0003648 A (SAMSUNG ELECTRONICS CO., LTD.) 12 January 2021 (2021-01-12)<br>See paragraphs [0056]-[0082]; and figures 5-6. | 1-15 |
| A | KR 10-2020-0018011 A (KT CORPORATION) 19 February 2020 (2020-02-19)<br>See paragraphs [0032]-[0049]. | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 November 2021** | **26 November 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
**Information on patent family members**

International application No.

**PCT/KR2021/010030**

| Patent document cited in search report | | | Publication date (day/month/year) | Patent family member(s) | | | Publication date (day/month/year) |
|---|---|---|---|---|---|---|---|
| KR | 10-2020-0068744 | A | 15 June 2020 | CN | 111527784 | A | 11 August 2020 |
| | | | | EP | 3706493 | A1 | 09 September 2020 |
| | | | | JP | 2021-506186 | A | 18 February 2021 |
| | | | | US | 10992424 | B2 | 27 April 2021 |
| | | | | US | 2020-0295883 | A1 | 17 September 2020 |
| | | | | US | 2021-0226735 | A1 | 22 July 2021 |
| | | | | WO | 2020-085854 | A1 | 30 April 2020 |
| KR | 10-2020-0087719 | A | 21 July 2020 | CN | 113316957 | A | 27 August 2021 |
| | | | | EP | 3897049 | A1 | 20 October 2021 |
| | | | | WO | 2020-145751 | A1 | 16 July 2020 |
| KR | 10-2021-0003648 | A | 12 January 2021 | US | 2021-0007081 | A1 | 07 January 2021 |
| | | | | WO | 2021-002713 | A1 | 07 January 2021 |
| KR | 10-2020-0018011 | A | 19 February 2020 | | None | | |

Form PCT/ISA/210 (patent family annex) (July 2019)